(19) Europäisches Patentamt / European Patent Office / Office européen des brevets

(11) **EP 4 498 330 B1**

(12) **EUROPEAN PATENT SPECIFICATION**

(45) Date of publication and mention
of the grant of the patent:
**28.01.2026 Bulletin 2026/05**

(21) Application number: **23386069.1**

(22) Date of filing: **27.07.2023**

(51) International Patent Classification (IPC):
*G06V 10/764* (2022.01)   *G01S 7/41* (2006.01)
*G01S 13/90* (2006.01)   *G06N 3/09* (2023.01)
*G06N 20/00* (2019.01)   *G06V 10/77* (2022.01)
*G06V 10/82* (2022.01)   *G06V 20/13* (2022.01)
*G06V 20/17* (2022.01)   *G06V 20/10* (2022.01)
*G06V 20/52* (2022.01)   *G06V 10/46* (2022.01)

(52) Cooperative Patent Classification (CPC):
G06V 20/13; G01S 7/417; G01S 13/9027;
G06N 3/045; G06N 3/08; G06N 3/09; G06N 20/00;
G06V 10/46; G06V 10/764; G06V 10/7715;
G06V 10/82; G06V 20/17; G06V 20/176;
G06V 20/194; G06V 20/52

(54) **A SYSTEM AND METHOD FOR CLASSIFYING DAMAGED BUILDINGS AND UNDAMAGED BUILDINGS**

SYSTEM UND VERFAHREN ZUR KLASSIFIZIERUNG VON BESCHÄDIGTEN GEBÄUDEN UND UNVERSEHRTEN GEBÄUDEN

SYSTÈME ET PROCÉDÉ DE CLASSIFICATION DE BÂTIMENTS ENDOMMAGÉS ET DE BÂTIMENTS NON ENDOMMAGÉS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**29.01.2025 Bulletin 2025/05**

(73) Proprietor: **Iceye Oy**
**02150 Espoo (FI)**

(72) Inventors:
• **Mainvis, Aymeric**
02150 Espoo (FI)
• **Llop Cardenal, Roberto**
02150 Espoo (FI)
• **Kourkouli, Penelope**
02150 Espoo (FI)

(74) Representative: **Crowell & Moring U.K. LLP**
**199 Bishopsgate**
**London EC2M 3TY (GB)**

(56) References cited:
• LAPIAN BELLANIE ET AL: "Detection of Building Damage due to the 2016 Kumamoto Earthquake using Texture Combinations of Single Post-event Airborne SAR Data", 2021 7TH ASIA-PACIFIC CONFERENCE ON SYNTHETIC APERTURE RADAR (APSAR), IEEE, 1 November 2021 (2021-11-01), pages 1 - 4, XP034047976, [retrieved on 20220120], DOI: 10.1109/APSAR52370.2021.9688416
• GE PINGLAN ET AL: "Building Damage Assessment Using Intensity SAR Data with Different Incidence Angles and Longtime Interval", JOURNAL OF DISASTER RESEARCH, vol. 14, no. 3, 28 March 2019 (2019-03-28), pages 456 - 465, XP093106863, ISSN: 1881-2473, DOI: 10.20965/jdr.2019.p0456
• ADRIANO BRUNO ET AL: "Multi-Source Data Fusion Based on Ensemble Learning for Rapid Building Damage Mapping during the 2018 Sulawesi Earthquake and Tsunami in Palu, Indonesia", REMOTE SENSING, vol. 11, no. 7, 11 April 2019 (2019-04-11), pages 886, XP093106864, DOI: 10.3390/rs11070886

EP 4 498 330 B1

**(Cont. next page)**

- YAO SUN ET AL: "CG-Net: Conditional GIS-aware Network for Individual Building Segmentation in VHR SAR Images", ARXIV.ORG, CORNELL UNIVERSITY LIBRARY, 201 OLIN LIBRARY CORNELL UNIVERSITY ITHACA, NY 14853, 17 November 2020 (2020-11-17), XP081969541, DOI: 10.1109/TGRS.2020.3043089

**Description**

The present application relates to classifying damaged buildings and undamaged buildings in synthetic aperture radar "SAR" images, for example following an event such as an earthquake.

Background

A Synthetic Aperture Radar (SAR) can be used to image an area on Earth, also known as an area of interest, by transmitting radar beams and recording the return echoes, i.e., returned radar energy, from those transmitted radar beams. SAR systems can be installed on airborne platforms such as aircraft, as well as in satellites operating from space. Various modes of operating the SAR (Scanning Synthetic Aperture Radar) can be used, such as stripmap, spotlight, and ScanSAR (Terrain Observation with Progressive Scan SAR).

A SAR is typically carried on board a moving platform, such as a satellite, and therefore moves with respect to a target on Earth to be imaged. As the platform moves, the SAR antenna location relative to the target changes with time. The movement of the antenna during imaging forms a "synthetic" aperture that can provide similar resolution to much larger antennas, by exploiting the change in frequency of received signals changes due to the Doppler effect. Thus, the received echoes have a spectrum of frequencies.

The use of SAR technology assists decision makers to monitor natural disasters and to detect damage during and after an event, regardless of light, weather, cloud and smoke conditions. However, one significant challenge for natural disasters is often the lack of pre-event data to perform change detection before and after the natural disaster.

Using both pre-event data and post-event data often delays the time required to detect damage during and after the natural disaster. This can lead to decision makers not being able to attend to emergencies in time. Furthermore, the lack of pre-event data may hinder the accuracy of detecting damage during and after an event.

Accordingly, there is a desire to not rely on pre-event data to assess building damage with SAR images, at least for the specific buildings or area of interest. Not relying on such specific pre-event data will improve the timeliness and reliability of detecting damages during and after an event. Furthermore, there is a desire to maintain or improve the accuracy of detecting building damage during and after an event without comparing pre-event data with post-event data. This is because pre-event data may not be readily available in certain areas and/or circumstances.

The invention is not limited to implementations which solve any or all of the disadvantages of the known approaches described above.

Additional background may be seen in the following research papers:

Lapian et al: "Detection of Building Damage due to the 2016 Kumamoto Earthquake using Texture Combinations of Single Post-event Airborne SAR Data", DOI: 1109/APSAR52370.2021.9688416, describes an exploration of post-event full polarimetric SAR images in building damage assessment. In this study, one post-event airborne SAR image of Pi-SAR-X2 was employed to detect the changes of residential buildings in Mashiki Town, Kumamoto Prefecture, Japan. The changes in scattering characteristics of collapsed and non-collapsed buildings were compared using variance, homogeneity, contrast and dissimilarity textures of the Grey Level Co-occurrence Matrix (GLCM) from building footprints and roof areas. In addition, due to the difficulty in detection using only one texture, combination of textures in different polarizations were also applied for damage detection. The results of this method were then compared with the field survey data. The result indicates the possibility of building damage assessment using only post-event data and solving the pre-event data limitation problem.

GE et al: "Building Damage Assessment Using Intensity SAR Data with Different Incidence Angles and Longtime Interval", DOI: 10.20965/jdr.2019.p0456, describes machine learning based damage classification for damaged and undamaged buildings using only post-event data captured by the TerraSAR-X satellite. Sun et al: "CG-Net: Conditional GIS-aware Network for Individual Building Segmentation in VHR SAR", DOI: 10.1109/TGRS.2020.3043089, describes a convolutional neural network capable of segmenting and classifying individual buildings in high-resolution SAR images.

ADRIANO et al: "Multi-Source Data Fusion Based on Ensemble Learning for Rapid Building Damage Mapping during the 2018 Sulawesi Earthquake and Tsunami in Palu, Indonesia", DOI: 10.3390/rs11070886, describes analysis of building damage recognition, employing multi-source data fusion and ensemble learning algorithms for rapid damage mapping tasks. A damage classification framework is introduced and tested to categorize the building damage following the recent 2018 Sulawesi earthquake and tsunami. Three robust ensemble learning classifiers were investigated for recognizing building damage from Synthetic Aperture Radar (SAR) and optical remote sensing datasets and their derived features. The contribution of each feature dataset was also explored, considering different combinations of sensors as well as their temporal information. SAR scenes acquired by the ALOS-2 PALSAR-2 and Sentinel-I sensors were used. The optical Sentinel-2 and PlanetScope sensors were also included in this study. A non-local filter in the preprocessing phase was used to enhance the SAR features. Results demonstrated that the canonical correlation forests classifier performs better in comparison to the other classifiers. In the data fusion analysis, Digital Elevation Model (DEM)- and SAR-derived features contributed the most in the overall damage classification. The proposed mapping framework successfully classifies four levels of building damage (with overall accuracy >90%, average accuracy >67%). The proposed framework learned the damage patterns from a limited available human-interpreted building damage annotation and expands this information to map a larger affected area.

Summary

The invention is defined by the claims. This Summary is provided to introduce a selection of concepts in a simplified form that are further described below in the Detailed Description. This Summary is not intended to identify key features or essential features of the claimed subject matter, nor is it intended to be used to determine the scope of the claimed subject matter; variants and alternative features which facilitate the working of the invention and/or serve to achieve a substantially similar technical effect should be considered.

There is disclosed in the following a method of classifying a building as a damaged building or an undamaged building in a synthetic aperture radar "SAR" image using machine learning, the method comprising: receiving SAR image data relating to an area of interest including a building to be classified; determining physical information relating to one or both of the area of interest and the SAR image data acquisition environment; and classifying, using a trained machine learning model, whether the building is a damaged building or an undamaged building, wherein: the trained machine learning model has been trained on a training dataset comprising training SAR image data relating to damaged buildings; and input features of the training SAR image data comprise physical information relating to one or both of areas including the damaged buildings and the data acquisition environment of the training SAR image data.

There is also disclosed a method of training a machine learning model to classify a building as a damaged building or an undamaged building in a synthetic aperture radar "SAR" image using machine learning, the method comprising: training the machine learning model to classify a building as a damaged building or an undamaged building within an area of interest using a training dataset, wherein: the training dataset comprises training SAR image data relating to damaged buildings; and input features of the training dataset comprise physical information relating to one or both of areas including the damaged buildings and the data acquisition environment of the training SAR image data.

There is disclosed in the following a method of classifying a building as a damaged building or an undamaged building in a synthetic aperture radar "SAR" image using machine learning, the method comprising: receiving SAR image data relating to an area of interest including a building to be classified; determining one or more statistical characteristics of a distribution of signal values of the received SAR image data for each building or building footprint; and classifying, using a trained machine learning model, whether the building is a damaged building or an undamaged building, wherein: the trained machine learning model has been trained on a training dataset comprising training SAR image data relating to damaged buildings; and input features of the training SAR image data comprise one or more statistical characteristics of the distribution of signal values for each building or building footprint of the training SAR image data of the training dataset.

There is also disclosed a method of training a machine learning model to classify a building as a damaged building or an undamaged building in a synthetic aperture radar "SAR" image using machine learning, the method comprising: training the machine learning model to classify a building as a damaged building or an undamaged building within an area of interest using a training dataset, wherein: the training dataset comprises training SAR image data relating to damaged buildings; and input features of the training dataset comprise one or more statistical characteristics of the distribution of signal values for each building or building footprint of the training SAR image data of the training dataset.

The methods described herein may be performed by software in machine readable form on a tangible storage medium e.g., in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards etc. and do not include propagated signals. The software can be suitable for execution on a parallel processor or a serial processor such that the method steps may be carried out in any suitable order, or simultaneously.

This application acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

The preferred features may be combined as appropriate, as would be apparent to a skilled person, and may be combined with any of the aspects of the invention.

Brief Description of the Drawings

Embodiments of the invention will be described, by way of example, with reference to the following drawings, in which:

Figure 1 shows a SAR sensor of a SAR satellite receiving reflected and scattered radar beams from a building in an area of interest;

Figure 2 shows an example SAR image comprising layover areas and shadow areas of undamaged buildings in an area of interest in the SAR image;

Figure 3 shows an illustration the relationship between building 100 damage status and radar beam reflections;

Figure 4 shows a pre-event optical image, a post-event optical image, a pre-event SAR image and a post-event SAR image;

Figure 5 shows a training dataset comprising training SAR image data of undamaged buildings and training SAR image data of damaged buildings;

Figure 6 shows prediction features of the trained machine learning model 650;

Figure 7 shows another training dataset comprising training SAR images of undamaged buildings and training SAR images of damaged buildings;

Figure 8 shows another training dataset comprising training SAR images of undamaged buildings and training SAR images of damaged buildings;

Figure 9 shows a worked example of a machine learning model for classifying a building as a damaged building or an undamaged building in a SAR image;

Figure 10 shows a flow chart of a method of classifying a building as a damaged building or an undamaged building in a SAR image;

Figure 11 shows a flow chart of a method of training a machine learning model to classify a building as a damaged building or an undamaged building in a SAR image;

Figure 12 shows a flow chart of a method of classifying a building as a damaged building or an undamaged building including training a machine learning model;

Figure 13a shows a SAR image showing a region affected by a wildfire;

Figure 13b shows physical information relating to the area shown in the SAR image of figure 13a;

Figures 14a and 14b show other physical information relating to the area shown in the wildfire SAR image of figure 13a.

Figure 15 shows features of the data used to form the SAR image of figure 13a.

Figure 16a shows an example maximum value distribution of undamaged buildings and an example maximum value distribution of damaged buildings.

Figure 16b shows an example mean value distribution of undamaged buildings and an example mean value distribution of damaged buildings;

Figure 16c shows an example standard deviation value distribution of undamaged buildings and an example standard deviation value distribution of damaged buildings;

Figure 17 shows a classified wildfire SAR image;

Figure 18 shows an example of physical information, statistical information and damage prediction values;

Figure 19 shows an example of how the statistical characteristics of derived signal values can also be used to differentiate between damaged and undamaged buildings; and

Figure 20 shows a computing system, on which any of the above-described methods may be performed.

Common reference numerals are used throughout the figures to indicate similar features.

Detailed Description

Embodiments of the present invention are described below by way of example only. These examples represent the best mode of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

Some embodiments of the invention provide systems and methods for processing SAR image data to classify damaged buildings and undamaged buildings. For this purpose, a SAR may be carried on a platform travelling with respect to the surface of Earth. For example, a SAR is commonly used onboard satellites. However, the methods and systems described here are not limited to data obtained from space and may be performed on data obtained using aircraft or any other suitable platform.

The classification of buildings may be performed using SAR images. In some implementations described further below, the classification may be performed using raw image data, or partially processed data that does not form an image. Therefore, references in the following to SAR images should be considered to include raw or partially processed SAR image data unless otherwise stated.

The classification of buildings as "damaged" or "undamaged" may be according to predetermined criteria described further in the following, for example one or more building parameters changing after an event by more than a predetermined threshold amount. One example criterion is a reduction in the height of a building that would suggest that some structural damage had taken place.

It is known that an event, in particular a natural disaster, such as a wildfire or an earthquake, can cause damage to buildings. Pre-emptively, a SAR satellite may continuously capture SAR images of an area of interest comprising buildings before a natural disaster occurs, such SAR images are also referred to as pre-event SAR images. In response to a natural disaster, a SAR satellite may capture SAR images of the area of interest after, or during, the natural disaster, such SAR images are also referred to as post-event SAR images. Thereafter, the post-event SAR images can be compared with the pre-event SAR images to classify one or more buildings in the area of interest as an undamaged building or a damaged building. However, this method of classifying buildings as undamaged or damaged can be inefficient and unreliable. This is because the SAR satellite may not have captured pre-event SAR images relating to those buildings in the area of interest before the natural disaster, meaning that the SAR satellite will not be able to make any comparison between the post-event SAR images and the pre-event SAR images. The present invention addresses this problem and discloses a system and method to classify a building as an undamaged building or damaged building in a post-event SAR image.

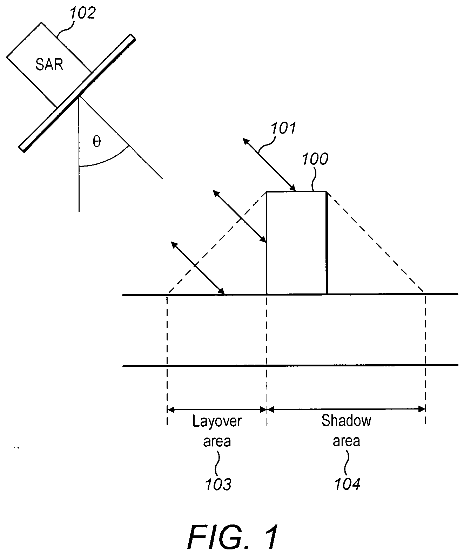

Figure 1 shows a SAR sensor of a SAR satellite 102 receiving reflected and scattered radar beams 101 from a building 100 in an area of interest. When a SAR satellite 102 acquires SAR image data relating to an area of interest, objects inside the area of interest directly, or indirectly, reflect or scatter the radar beam 101 back to a radar sensor of the SAR satellite 102. Based on certain characteristics of the reflected radar beam 101, information can be obtained regarding the object(s) inside the area of interest. For example, the amplitude of the reflected and scattered radar beams 101 can be representative of the reflectivity of object(s) in the area of interest. The received radar echoes 101 can be mapped onto a SAR image, wherein a shade and/or colour of a pixel in the SAR image represents the characteristics of the reflected radar beams 101. For example, a lighter shade or brighter colour can indicate a higher amplitude of the reflected and scattered radar beams 101.

When a SAR satellite 102 acquires SAR image data related to a building 100, the building 100 reflects and/or scatters at least some of the radar beams 101 back to the radar sensor of the SAR satellite 102. Two radar-specific geometrical distortions can occur to buildings 100 in a SAR image: a layover area 103; and a shadow area 104.

When the radar beams 101 of the SAR sensor reach a building 100, radar beams 101 that reach an upper portion of the building 100 are reflected or scattered back to the SAR sensor before the radar beams 101 that reach a lower portion of the building 100. Accordingly, the upper portion of the building 100 appears closer to the SAR sensor than the lower portion of the building 100. This creates a geometrical distortion where the top portion of the building 100 appears to the offset or "laid over" from the bottom portion of the building 100. Due to double angular bounce (e.g., in the corners of the building) and superposition of the geometrical characteristics of the building 100, the radar-facing side of building 100 would appear as a bright layover area 103. The layover area 103 can thus be indicated by a group of bright or light pixels in the SAR image. In the case of buildings 100, the radar-facing area of a building 100 can correspond to the roof, wall and floor of the building 100.

In other cases, some parts of the building 100 are not exposed to the incoming radar beams 101 from the SAR satellite 102, and therefore do not reflect or scatter any radar beams 101 back to SAR satellite 102. Such parts are called shadow areas 104. Shadow areas 104 related to a non-radar-facing area of the building 100 appear as a dark spot due to the physical shape of the building 100 blocking the radar beams 101 from reaching and being reflected back or back-scattered from the non-radar-facing area of the building 100. The shadow area 104 can be indicated by a group of dark pixels on the SAR image. Where a building has been damaged, for example reduced to rubble, the relationship between the image layover and shadow areas will be different compared to when the damage has not occurred.

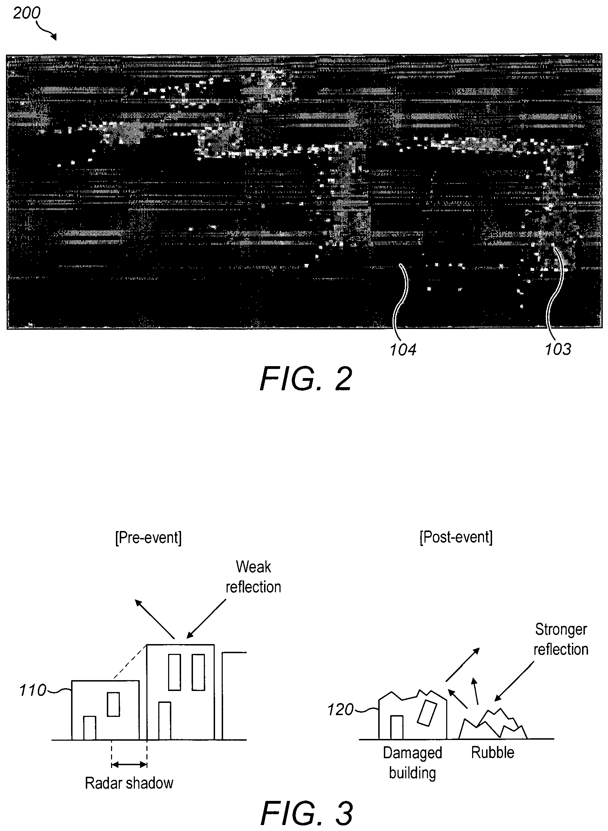

Figure 2 shows an example SAR image 200 comprising layover areas 103 and shadow areas 104 of undamaged buildings in an area of interest in the SAR image 200. In Figure 2, one can clearly see that undamaged buildings have a distinct layover area 103 and corresponding shadow area 104 in the returned SAR image 200. The arrangement of the layover area 103 and shadow area 104 may be used to characterise the building 100 as undamaged. On the other hand, a damaged building might return a SAR image 200 with no clear distinctions between the layover area 103 and shadow area 104, or no identifiable layover area 103 and shadow area 104 at all.

Layover areas 103 and shadow areas 104 can be estimated using a physical relationship between an incidence angle of the SAR satellite 102 and a height of the building 100. Specifically, the layover area 103 can be estimated as $\frac{h}{tan\theta}$ and the shadow area 104 can be estimated as $htan\theta$, wherein $h$ is the height of the building 100 and $\theta$ is the incidence angle of the SAR satellite 102.

The height of the building can be estimated from a building footprint dataset, for example a dataset including the footprint, i.e., ground area occupied, of any building. Additionally, or alternatively, the height of the building 100 can also be estimated where building 100 height information is unavailable. For example, the height of the building 100 can be estimated to be an average two-storey house height, for example if the area of interest is in a rural or suburban area that does not have a lot of tall buildings. In this case, for example, the height of a building 100 can be estimated to be around 9 metres. The height of the building 100 can be updated based on the building footprint dataset.

Figure 3 shows an illustration the relationship between building 100 damage status and radar beam 101 reflections. When a SAR satellite 102 emits a radar beam 101 to a building 100, the building 100 reflects the radar beam 101 emitted by the SAR satellite 102. The reflected radar beam 101 has different properties depending on a damage status of the building 100. The damage status of the building 100 comprises an undamaged building or a damaged building. For example, as explained above, the layover area 103 and shadow area 104 of the building 100 in the SAR image 200 is affected by the damage status of the building 100, for example as a result of changes to the height and footprint of the building. In addition, other properties of the reflected radar beam 101 can be dependent on the damage status of the building 100. In particular, the amplitude of the reflected radar beam 101 is affected by the damage status of the building 100. For example, undamaged buildings return radar beams 101 with lower amplitudes on average, whereas damaged buildings return radar beams 101 with higher amplitudes on average. The phase and phase derivative values of the reflected radar beam 101 can also be affected by the damage status of the building 100.

In the methods and systems to be described in the following, a machine learning model is trained to classify a building as a damaged building or an undamaged building using a training dataset. The training dataset comprises training SAR image data of damaged buildings. Input features of the training dataset may comprise one or more statistical characteristics of the distribution of signal values for each building of the training SAR image data of the training dataset. For example, the signal values may represent amplitude, phase, information derived from the amplitude and phase, frequency, coherent change detection values between sub-apertures of the SAR image data, or any other parameter of the received signals.

Optionally, the training dataset can comprise one or more statistical characteristics of the distribution of signal values for each building footprint of the training SAR image data of the training dataset.

The one or more statistical characteristics may comprise any one or more of: a back scattered power probability density function (PDF); range of the signal values; standard deviation of the signal values; minimum value of the signal values; maximum value of the signal values; mean value of the signal values; kurtosis of the signal values; skewness of the signal values; statistical values of another building closest to the current building 100. One or more of these statistical characteristics may be used as input features in any combination. This list of statistical characteristics is not intended to be exhaustive. Other statistical characteristics may be supported in some examples.

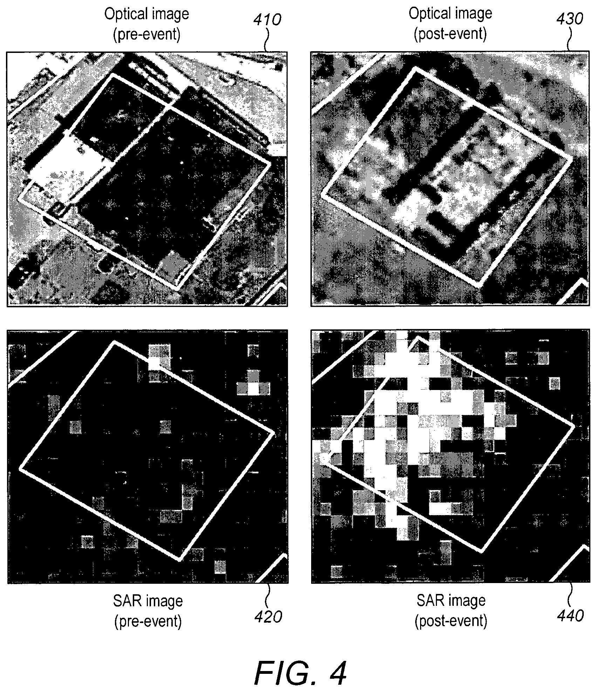

Figure 4 shows a pre-event optical image 410 of an undamaged building, a post-event optical image 430 of the building after being damaged, a pre-event SAR image 420 of the undamaged building and a post-event SAR image 440 of the building after being damaged. In the specific example of figure 4 the event causing the damage was a very destructive wildfire (the Dixie Fire) that took place in California in 2021; however, the systems and methods disclosed herein are not limited to classifying a wildfire-damaged building from a post-event SAR image 440. The systems and methods could also be used to classify buildings damaged by other types of events causing damage to the building structure.

The properties of the reflected radar beams 101 can be represented in a SAR image 200 comprising a plurality of signal values, such as in pre-event SAR image 420 and in post-event SAR image 440. The properties of the reflected radar beams 101 can be statistically analysed for each building or building footprint in order to derive the one or more statistical characteristics. For example, the plurality of signal values can correspond to a plurality of pixels comprised in the SAR image 200. The plurality of signal values comprises one or more statistical characteristics.

In the images 420 and 440 shown in figure 4, the plurality of signal values can represent an amplitude of the reflected and back-scattered radar beams 101. The amplitude represents the strength of the returned signal and is indicated in images 420 and 440 by the brightness of each pixel.

SAR image 200 of an undamaged building comprise one or more statistical characteristics indicative of an undamaged building. A pre-event SAR image 420 shows an undamaged building while a post-event SAR image 440 shows the same building after being damaged. It can be seen that amplitude or brightness (in this example the signal values) of the SAR signal for the undamaged building in image 420 appears differently from that of the building after it has been damaged in image 440. This is because the signal values being back-scattered or reflected back from the undamaged building are different from those of the damaged building. This can be due to a change in the layover areas 103, shadow areas 104 and in the properties of the radar beams 101 that reflect from the building 100 itself. The signal values of SAR images 200 of undamaged buildings can create a signature statistical characteristic corresponding to an undamaged building. In particular, the signal values create a signature back scattered power probability density function (PDF) corresponding to an undamaged building.

In the images shown in Figure 4, the pre-event SAR image 420 shows more dark coloured pixels than post event image 440. The pre-event SAR image 420 comprises an undamaged building that has, for example, an intact roof with planar surfaces that tend to reflect radar beams 101 away from the satellite, resulting in lower amplitude radar returns. The distribution of the pixel values for the building shown in the pre-event SAR image 420 thus creates a signature statistical characteristic corresponding to the undamaged building.

In post-event SAR image 430, the building has been severely damaged by a wildfire. SAR image 430 of a damaged building comprises one or more statistical characteristics indicative of a damaged building. Due to the building having been burnt, layover areas 103 and shadow areas 104 are altered or may no longer exist as a result of the damage to the building 100. The layover areas 103 and shadow areas 104 can be altered due to the structural changes to the building 100 and/or terrain on which the building is situated. The rubble that is left behind by the damaged building 100 also can interact with radar signals quite differently than the angular roof did when it was intact, for example. Since most of the planar surfaces are gone, the rubble produces more incoherent backscattering of the radar beams 101. Somewhat unintuitively, the incoherent backscattering can result in a stronger radar return to the satellite than a highly reflective planar roof, since reflected energy is directional and is only reflected back to the satellite if the angle of the reflective surface is directly perpendicular to the radar beam (this is the same principle for why angular surfaces are used on stealth aircraft where the objective is to reduce the radar signature of the aircraft). As a result, the signal values of SAR images 440 of the damaged building are stronger and cause the area where the building is located to appear brighter, creating a different signature statistical characteristic corresponding to the damaged building. In particular, the signal values create a different signature back scattered power PDF corresponding to a damaged building.

In the images shown in Figure 4, the post-event SAR image 440 shows a greater number of lighter coloured pixels. This is because the post-event SAR image 440 comprises a damaged and the damaged building creates more backscatter of radar beams 101 with higher amplitudes of radar returns to the satellite. As described above, this can arise due to a greater amount of radar energy being backscattered to the satellite from the rubble of the building, as opposed to being reflected away by angular walls and the roof, as well as a reduction of radar shadows due to the building being damaged or destroyed. The distribution of the pixel values in the post-event SAR image 440 thus creates a signature statistical characteristic corresponding to a damaged building.

Based on this difference in the one or more statistical characteristics (e.g., probability density function, range, standard deviation, maximum value, minimum value, mean value, etc.,) in a SAR image 200 of damaged buildings and SAR image 200 of undamaged buildings, it is possible to classify a building in a post-event SAR image 440 as a damaged building or an undamaged building. Specifically, a machine learning model can be trained to classify a building as a damaged building or an undamaged building in a SAR image based on one or more statistical characteristics of the SAR image.

Optionally, the machine learning model can be trained on only the one or more statistical characteristics of SAR images 200 of damaged buildings. Optionally, the machine learning model can be trained on the one or more statistical characteristics of SAR images 200 of damaged buildings and the one or more statistical characteristics of SAR images 200 of undamaged buildings.

In the above example, the statistical characteristics based on signal values corresponding to only the amplitude of the radar returns for each building are used to classify the building as either damaged or undamaged. In other examples, the statistical characteristics of other signal values related to the SAR data can be used alternatively or in addition to the amplitude signal values to help with classifying a building as either damaged or undamaged. For example, signal values derived from the phase component of the SAR signal can be used. SAR signals comprise a real part (amplitude) and an imaginary component (phase). As discussed, the amplitude represents the strength of the radar return measured by the satellite. The phase component of SAR data represents a fraction of a single SAR wavelength and provides a measure of how much the radio waves have shifted "out of phase" after they interact with the scatterers on the surface. Phase can be used to detect very small changes in terrain since it represents a fraction of the wavelength of the SAR signal and is traditionally used for performing interferometric SAR to detect small changes between different images taken from two different satellite positions separated by a small distance.

In one example, the plurality of signal values used to help classify a building as damaged or undamaged can be a phase derivative value (PDV) of the SAR echo signals. The PDV represents the derivative, or the rate of change, of the phase of the reflected radar beams 101 in the pixels of the SAR images 200. The phase derivative values can be calculated with respect to the azimuth or to the range directions of a SAR image over a number of pixels. The PDV may be calculated based on a subset of pixels, for example a 9 x 9 kernel. Using a sliding 9x9 kernel, PDVs can be calculated for individual tiles of a SAR image 200. For example, in the systems and methods described herein, the SAR image 200 and the training SAR image data can be divided into tiles, or a group of pixels, and the PDVs can be calculated on a pertile basis. For example, each tile can represent one building. The PDV may be calculated with respect to any spatial direction. For example, as mentioned above, the PDV can be calculated with respect to the range and azimuth of the SAR satellite 102. For each building, the statistical characteristics of the PDV values can be used independently or in conjunction with the statistical characteristics of other signal values in order to help classify a building as either damaged or undamaged.

In another example, signal values to help classify damaged buildings can be obtained by comparing amplitude and/or phase values in both range and/or azimuth sub-apertures formed from a single acquisition. In this example, a single high-resolution image based on a set of SAR data is essentially divided up into multiple lower resolution images from the same SAR image data. These multiple images, or sub-apertures, are obtained in the range direction by dividing the bandwidth (frequency) of the signal into multiple "slices", and in the azimuth direction by dividing the imaging time into multiple "looks".

For example, in the range direction, the different sub-apertures can be formed by taking the bandwidth, or range of frequencies, of the single image, and dividing the chirp bandwidth into different adjacent ranges of frequencies. For example, a SAR image can be taken using a chirp bandwidth of 300 MHz. Then, sub-apertures can be formed by splitting the full bandwidth into two (or more bands). For example, two sub-apertures could be formed by dividing the bandwidth into 150 MHz sub-apertures. The sub-apertures are lower resolution because the information received is now split between two images. The signal values related to range sub-apertures could be useful, for example, to discriminate surfaces which backscattering of the SAR signal depends on the frequency. This could include, for example, the roof of buildings or burning areas.

In the azimuth direction, different sub-apertures can be formed by dividing the energy from the full acquisition into multiple images formed from energy received by smaller time slices. For example, a full acquisition of 10 seconds can be divided into four different "looks" based on 2.5 second slices each of the original data. As before the resolution of each of these multiple images is less because it is formed from 2.5 seconds of radar information instead of the full 10 seconds.

The change in both amplitude and phase between successive sub-apertures, either in the range or azimuth direction, can then be calculated using coherent change detection (CCD). Coherent change detection is traditionally used in interferometric SAR (inSAR) to detect height differences by comparing the phase in two separate images taken from two slightly different positions. The current method differs from inSAR, which is typically used to detect height differences in terrain and for mapping, because inSAR is used on two separate images, whereas in this example different sub-apertures of the same image are compared. In inSAR, amplitude is used to establish coherence, and the phase is compared, whereas in this case differences between both amplitude and phase are compared between the successive sub-apertures using coherent change detection.

As part of the CCD process, a value is assigned to each pixel in the building footprint or buffered building footprint representing the amount of change of either amplitude or phase between the successive sub-apertures in range or in azimuth. These are examples of four additional signal values (amplitude CCD in range, phase CCD in range, amplitude CCD in azimuth, and phase CCD in azimuth) that may be used to help classify a building as damaged or undamaged. The distributions of the pixel values for each of these signals, either by themselves or in combination with the distributions of pixel values from other signals, can create signature statistical characteristics corresponding to a damaged building and/or an undamaged building. The signature statistical characteristics can then be used to classify each building as either damaged or undamaged, for example by training a machine-learning model to detect the specific signature statistical characteristics of damaged vs. undamaged buildings.

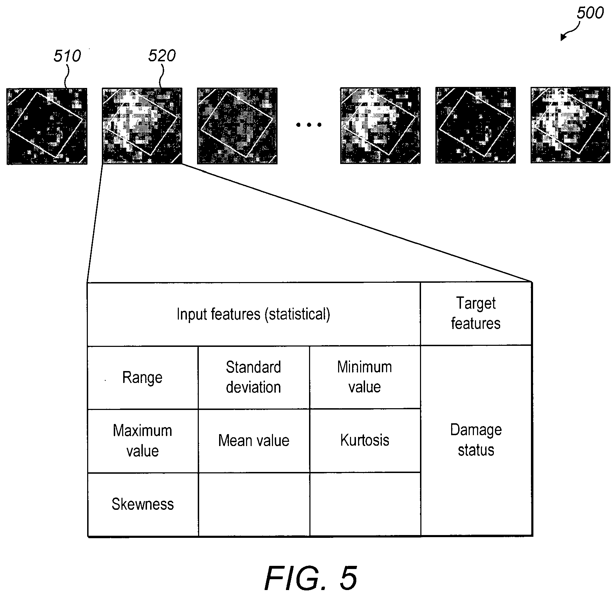

Figure 5 shows a training dataset 500 comprising training SAR image data of undamaged buildings 510 and training SAR image data of damaged buildings 520. Training SAR image data can comprise one or more of the following: raw SAR data, post-processed SAR data, a SAR image or a post-processed SAR image. In the illustrated embodiment, the training SAR image data is a training SAR image. In the illustrated embodiment, the machine learning model is trained on a training dataset 500 comprising training SAR images of undamaged buildings 510 and training SAR images of damaged buildings 520.

It is noted that it is not essential for the training dataset 500 to comprise training SAR image data of undamaged buildings 510, for example in the case of an unsupervised model. The machine learning model can be trained on a training dataset 500 comprising only training SAR image data of damaged buildings 520 to classify a building as a damaged building or an undamaged building in a SAR image. The two classes (here destroyed/damaged and undamaged) would usually be required as part of the training dataset for a supervised model.

It is also noted that the training SAR image data of the training dataset 500 are not required to be related to a particular natural disaster or any other event. In other words, it is possible to classify a building damaged by a wildfire using a machine learning model trained on, for example, training SAR image data of buildings damaged by a tornado or earthquake.

In Figure 5, the training SAR images of undamaged buildings 510 are SAR images 200 comprising undamaged buildings. The training SAR images of damaged buildings 520 are SAR images 200 comprising damaged buildings.

The training SAR images of undamaged buildings 510 and the training SAR images of damaged buildings 520 comprise input features and target features. The input features comprise the one or more statistical characteristics of the training SAR image. The target features comprise a damage status of the building(s) in the training SAR image. The damage status is a binary class comprising "damaged building" or "undamaged building".

Optionally, the training SAR images can be acquired from a plurality of SAR satellites. Optionally, training SAR images from different SAR satellites can be compared and/or normalised before being used to train the machine learning model.

Optionally, the training SAR images can be cross validated to improve the accuracy of the building damage prediction. Optionally, one or more of the input features can be normalised to improve the optimization process of the training method.

For example, the input features can be normalised using a robust scaler. The robust scaler is an example of input feature scaling. Feature scaling comprises transforming one or more of the input features of the training dataset to a normalised scale. The robust scaler normalises the one or more input features based on each respective median value of the one or more input features. Advantageously, the robust scaler identifies anomalies in the input features. Anomalies introduce noise and bias in the trained machine learning model and therefore eliminating the anomalies in the input features improves the accuracy of the trained machine learning model. Advantageously, the robust scaler identifies anomalies whilst maintaining the shape and scale of the original input features before normalisation. Advantageously, the normalised scale also ensures that the input features have equal weight when being inputted into the learning algorithm or model. Therefore, the input features improve interpretability and comparability between the input features. Normalisation is not limited to the one or more statistical characteristics, normalisation can be applied to other input features, such as physical information, which is described in further detail below.

In the method illustrated in figure 5, the input features and the target features are trained on a learning algorithm or model. For example, the learning algorithm can be a random forest algorithm. It is noted that the skilled person would understand that other learning algorithms and models could be implemented. For example, a convolution neural network (CNN), such as EfficientNet or a Generative Adversarial Network to build a Variational Autoencoder. This list is not intended to be exhaustive.

Optionally, the training dataset 500 can be split into a training sample set and a testing sample set for evaluating a performance of the learning algorithm. Optionally, the training dataset 500 can be stratified.

The learning algorithm may be optimized to improve a performance metric of the machine learning model. In the illustrated training dataset of figure 5, the performance metric of the machine learning model is accuracy. The accuracy of the machine learning model is defined as a proportion of correct predictions (both true positives and true negatives) among the total number of SAR images 200 predicted.

Alternatively, or in addition, other performance metric(s) may be optimised. Other performance metrics include, but are not limited to: precision, recall, F1, True skill score (TSS). Precision is defined as the capability of the machine learning model to correctly classify positive cases, for example, "damaged building". Recall is defined as the capability of the machine learning model to correctly classify all of the positive cases. F1 is defined as the harmonic average of precision and recall. TSS is defined as a range over [-1:1] such that TSS = -1 means every event is incorrectly classified; TSS = +1 means every event is correctly classified; and TSS = 0 means the machine learning model predicts consistently with a random chance predictor.

The accuracy may be optimised using an optimization method. A cost function may be derived based on the proportion of incorrect predictions among the total number of SAR images 200 predicted. The accuracy of the machine learning model may be optimized by minimising the proportion of incorrect predictions among the total number of SAR images 200 predicted by updating hyperparameters of the learning algorithm with each iteration of prediction. For example, the hyperparameters can be updated using a randomized search on hyperparameters. It is noted that the skilled person would understand that other optimization method could be implemented to improve the accuracy of the machine learning model.

Once the accuracy has been optimised, the machine learning model becomes a trained machine learning model configured to classify whether a building 100 in the SAR image 200 is damaged or undamaged based on the statistical characteristics of the SAR image 200 and output the classification optionally with an associated probability of the classification according to a decision threshold. The decision threshold can be set at 0.5 out of 1, such that, for example, the building is classified as damaged if the output probability is greater than 0.5 and undamaged if the output probability is less than or equal to 0.5. Optionally, the decision threshold can be adjusted to set a higher or lower threshold for each classification class.

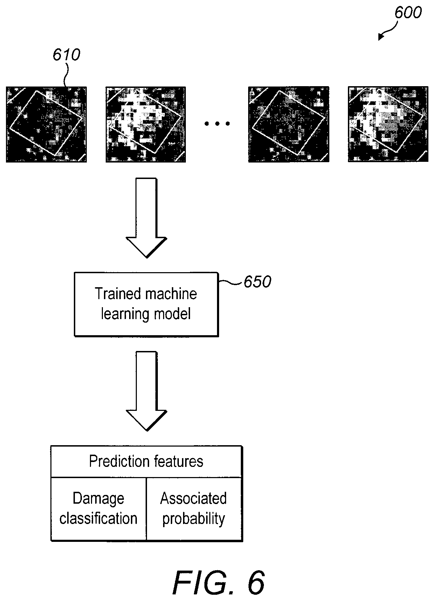

Figure 6 shows prediction features of the trained machine learning model 650. To make a prediction on whether a building 100 in the SAR image 200 is damaged or undamaged, information from the SAR image data, such as one or more statistical characteristics of a building or building footprint in a SAR image 610 for prediction is input into the trained machine learning model 650. The trained machine learning model 650 outputs prediction features that the trained machine learning model 650 has been trained to output based on the information used for the prediction. The prediction features comprise a classification of whether the building 100 is damaged or undamaged. The prediction features can further comprise an associated probability of the classification of whether the building 100 is damaged or undamaged. The SAR image 610 for prediction can be a post-event SAR image.

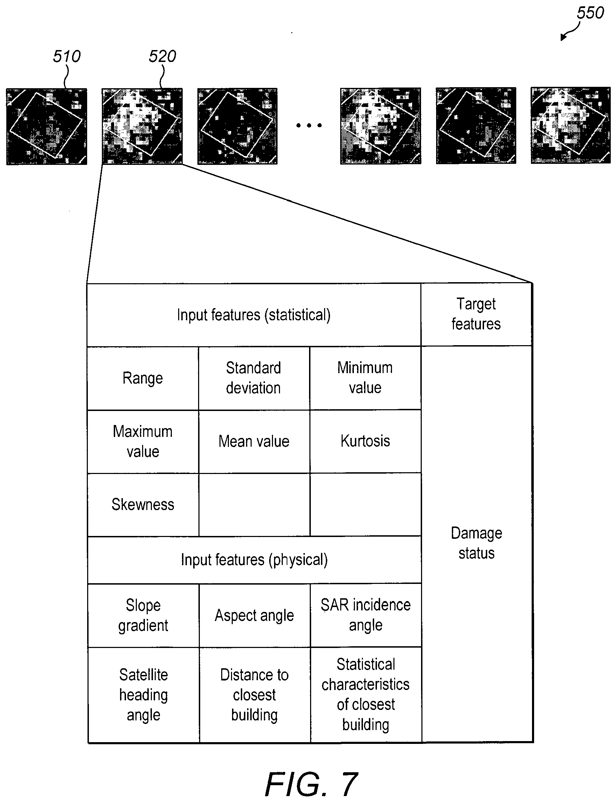

Figure 7 shows another training dataset 550 comprising training SAR images of undamaged buildings 510 and training SAR images of damaged buildings 520. For simplicity, only the differences between the training dataset 550 of Figure 7 and the training dataset 500 of Figure 5 will be described.

Again, it is not essential for the training dataset 550 to comprise training SAR image data of undamaged buildings 510. The machine learning model can be trained on a training dataset 550 comprising only training SAR image data of damaged buildings 520 to classify a building as a damaged building or an undamaged building in a SAR image.

It is also noted again that the training SAR image data of the training dataset 550 are not required to be related to a particular natural disaster or any other event. In other words, it is possible to classify a building damaged by a wildfire using a machine learning model trained on, for example, training SAR image data of buildings damaged by a tornado or an earthquake.

Input features of the training dataset 550 in the methods described here further comprise physical information. Physical information may relate to one or both of the area of interest, optionally including the building to be classified, and the SAR image data acquisition environment.

Environmental information may comprise information regarding the environment surrounding the building 100 to be classified. Environmental information may comprise digital elevation model (DEM) information. Other environmental information may be supported in some examples.

DEM information may comprise geospatial information of a location of the building 100. DEM information can be an elevation model of the location of the building 100. DEM information can comprise at least one of slope gradient and aspect angle.

Aspect angle is a geometric property of a terrain on which the building 100 is situated. Specifically, the aspect angle represents a direction in which a slope of the terrain faces, or an orientation of a particular surface of the terrain with respect to a reference direction. The aspect angle may comprise the azimuth or compass direction that the slope or surface of the terrain is facing.

In an example, the aspect angle may be measured in degrees, ranging from 0° to 360°, with 0° representing north, 90° representing east, 180° representing south, and 270° representing west. This measurement provides information about the spatial arrangement and exposure of certain features of the terrain, such as slopes, ridges, or valleys, in relation to the cardinal directions.

The use of DEM information is particularly advantageous because the terrain on which the building 100 is situated can affect the layover and shadow regions of buildings and thus their statistical characteristics as well as how they might appear in a SAR image. While the layover amounts and shadow amounts will be relatively consistent for buildings located on flat ground, they can be quite different for buildings located in hilly or mountainous areas. For example, a building located on a slope that is facing the satellite will appear to have a longer layover towards the satellite and less of a radar shadow behind it. Furthermore, additional comparisons can be made by the learning algorithm between the DEM information and the one or more statistical characteristics acquired by SAR satellite 102. Advantageously, the machine learning model can more accurately identify the signature physical information corresponding to a damaged or undamaged building.

Building information comprises information regarding properties of the building 100. Building information may comprise at least one of the following: building footprint information; distance to closest building; and statistical characteristics of closest building. This list is not intended to be exhaustive. Other building information may be supported in some examples.

It will be appreciated that in order to classify a building it may be desirable to analyse SAR image data from an area larger than the area that would have been occupied by the building before it was damaged, i.e., the occupied area plus a buffer area outside the occupied area. One reason for this is that if a building is reduced to rubble, it may occupy a larger area. On the other hand, it is desirable to minimise the buffer area, for example to reduce the data processing requirement and/or to eliminate noise. Therefore, building footprint information may for example comprise a buffer distance for buildings in the area of interest. The buffer distance of the building may be estimated using the physical relationship between the incidence angle, the height of the building and the sizes of the layover area 103 and shadow area 104. The layover and shadow areas may be derived from the incidence angle and the heading angle of the satellite, the shape of the building and the height of the building (for example using 9m as the standard height for a typical building where precise information is not available). The incidence angle of the satellite and the height of the building may be used to derive the layover and shadow lengths ($h*tan\Theta$ and $h/tan\Theta$). The heading angle of the satellite may be used to differentiate the layover and shadow regions for a given building footprint with its specific shape. The final "buffered" building footprint may then be obtained by sliding the building footprint by A meters on the layover region (where A is the length of the layover) and by B meters on the shadow region (where B is the length of the shadow) and then by merging the three polygons: the layover-sliding building footprint, the shadow-sliding building footprint and the genuine building footprint. Specifically, the buffer distance can be estimated as the minimum value between $\frac{h}{tan\theta_{post}}$ and $htan\theta_{post}$. h is the height of the building 100. $\theta_{post}$ is the

incidence angle of the SAR satellite 102 for the post-event SAR image.

Using the method described above, the buffer distance used can be minimized. Advantageously, reducing and using the smallest buffer distance possible that captures the building footprint, the layover, and the shadow area reduces additional noise from the environment surrounding the building. It is noted that the buffer area and/or distance may not be uniform around the building footprint. The layover area and shadow area may be orientated in different directions causing a non-uniform distribution of the buffer distance around the building footprint. For example, in some instances, the layover area and shadow area may be orientated to each other that some sides of the building or building footprint may not have a buffered area.

Satellite information comprises information regarding the SAR satellite that acquired the training SAR image data. Satellite information may comprise SAR metadata. SAR metadata may comprise, for example, one or both of SAR satellite incidence angle and SAR satellite heading angle and other SAR metadata known to those skilled in the art. SAR metadata may further comprise the satellite imaging mode (e.g., spotlight, strip map, etc.) of the SAR satellite. This list is not intended to be exhaustive. Other satellite information may be supported in some examples.

A SAR satellite incidence angle is the angle at which an electromagnetic wave impinges upon a surface or boundary of an object or terrain. The SAR satellite incidence angle is an angle between the direction of propagation of the wave and the normal vector to the surface on which wave impinges the surface. When an electromagnetic wave impinges a surface, such as the terrain on which the building it situated or the building itself, the incidence angle determines how the electromagnetic wave interacts with the surface of the terrain or building. The behaviour of the wave, such as reflection, refraction, diffraction, or absorption, depends on the incidence angle and the properties of the terrain and/or object.

In radar applications, the incidence angle affects the radar signal's interaction with the target. The radar antenna emits electromagnetic waves, which are reflected or scattered by objects in their path. The angle at which these waves strike the target, known as the incidence angle, influences the characteristics of the radar return, including its amplitude, intensity, phase, and polarization.

A SAR satellite heading angle is the orientation or direction in which a SAR satellite 102 is pointing or facing in space. The SAR satellite heading angle represents the azimuth or compass bearing of a line of sight of the SAR satellite 102. Specifically, the SAR satellite heading angle indicates the angle between the SAR satellite's longitudinal axis and a reference direction.

The heading angle is typically measured in degrees and can range from 0° to 360°, with 0° or 360° representing a specific reference direction, often defined as north or a celestial reference such as the Greenwich meridian. By knowing the heading angle, one can determine the SAR satellite's 102 relative position and orientation with respect to a specific geographic or celestial reference frame.

Optionally, the machine learning model is trained on a training dataset 550 comprising only training SAR images of damaged buildings 520.

Training SAR images of undamaged buildings 510 may comprise physical information indicative of an undamaged building. The Training SAR images of undamaged buildings 510 create a signature set of physical information corresponding to an undamaged building, or a signature combination of physical information and statistical characteristics corresponding to an undamaged building.

Training SAR images of damaged buildings 520 may comprise physical information indicative of a damaged building. The training SAR images of damaged buildings 520 create a signature set of physical information corresponding to a damaged building or a signature combination of physical information and statistical characteristics corresponding to a damaged building.

SAR images 200 of undamaged buildings for prediction such as image 610 may comprise physical information indicative of an undamaged building. The SAR images 200 of undamaged buildings may create a signature set of physical information corresponding to an undamaged building.

SAR images 200 of undamaged buildings may comprise physical information and one or more statistical characteristics indicative of an undamaged building. The SAR images 200 of undamaged buildings may create a signature combination of physical information and one or more statistical characteristics corresponding to an undamaged building.

SAR images 200 of damaged buildings may comprise physical information indicative of a damaged building. The SAR images 200 of damaged buildings may create a signature set of physical information corresponding to a damaged building.

SAR images 200 of damaged buildings may comprises physical information and one or more statistical characteristics indicative of a damaged building. The SAR images 200 of damaged buildings may create a signature combination of physical information and one or more statistical characteristics corresponding to a damaged building.

Based on this difference in the one or more statistical characteristics and physical information in a SAR image 200 of damaged buildings and SAR image of undamaged buildings, it is possible to distinguish damaged buildings from undamaged buildings in the SAR image. Specifically, a machine learning model can be trained to classify a building as a damaged building or an undamaged building in a SAR image 200 based on the one or more statistical characteristics and physical information of the SAR image 200.

The combination of the one or more statistical characteristics and physical information of the SAR image may improve the accuracy of the trained neural network.

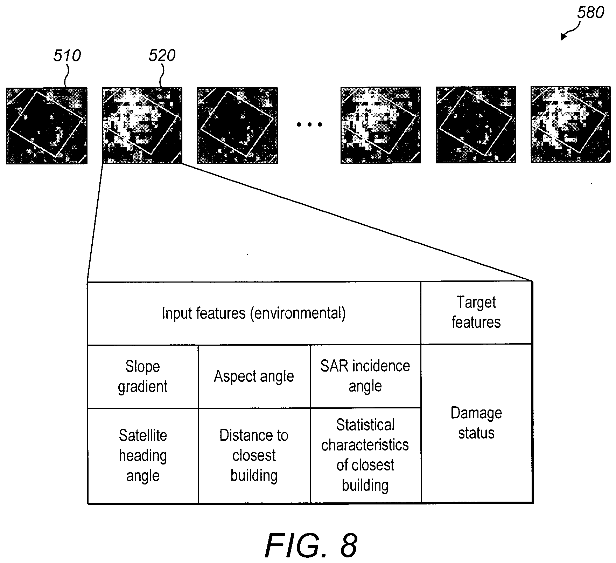

Figure 8 shows another training dataset 580 comprising training SAR images of undamaged buildings 510 and training SAR images of damaged buildings 520. For simplicity, only the differences between the training dataset 580 of Figure 8 and the training dataset 500 of Figure 5 and training dataset 550 of Figure 7 will be described.

Again, it is not essential for the training dataset 580 to comprise training SAR image data of undamaged buildings 510. The machine learning model can be trained on a training dataset 550 comprising only training SAR image data of damaged buildings 520 to classify a building as a damaged building or an undamaged building in a SAR image.

It is also noted again that the training SAR image data of the training dataset 580 are not required to be related to a particular natural disaster or any other event. In other words, it is possible to classify a building damaged by a wildfire using a machine learning model trained on, for example, training SAR image data of buildings damaged by a tornado or earthquake.

Input features of the training dataset 550 in the methods and systems described here comprise only physical information. Physical information may relate to one or both of areas including the damaged buildings and the data acquisition environment of the training SAR image data, as described in relation to Figure 7.

It is noted that the one or more statistical characteristics are not essential. For example, where the machine learning model is a convolution neural network (CNN), such as EfficientNet or a Generative Adversarial Network (GAN), the CNN and GAN may generate SAR sub-images from the training SAR image data and the CNN and GAN can be trained without the one or more statistical characteristics as input features of the training dataset 580. Instead, the learning algorithm and model of the CNN and GAN may self-identify the one or more statistical characteristics during the learning process. Optionally, the machine learning model may receive SAR sub-images as input features of the training dataset 580. Optionally, the machine learning model may receive SAR sub-images as input features of the training dataset 580 in combination with the physical information.

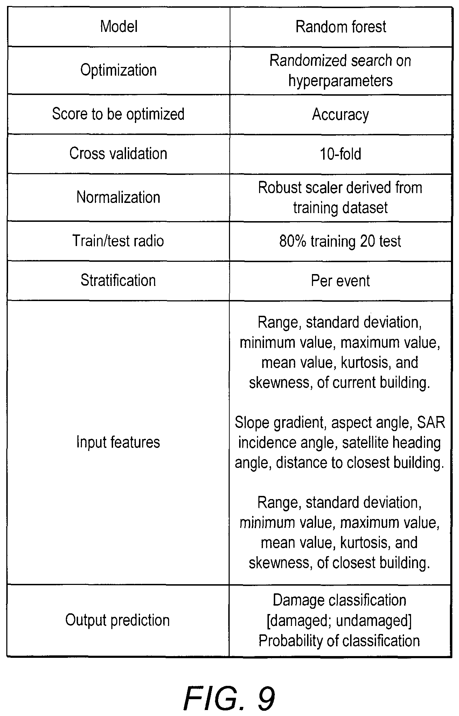

Figure 9 shows a worked example of a machine learning model for classifying a building as a damaged building or an undamaged building in a SAR image 200. In the worked example, the machine learning model implements a random forest algorithm. The score of the machine learning model to be optimised is accuracy. The accuracy is optimised using randomised search on hyperparameters. The training dataset is cross-validated 10-fold. The training features, such as the input features and the target features, are normalized using a robust scaler derived from training dataset. Before the machine learning model is trained, the training dataset is split into 80% training sample and 20% test samples. The training dataset is stratified per event.

The input features of the training dataset and the input SAR image to be classified are: range, standard deviation, minimum value, maximum value, mean value, kurtosis, and skewness, of the current building to be classified in the SAR image; slope gradient, aspect angle, SAR incidence angle, satellite heading angle, distance to the closest building from the current building; and range, standard deviation, minimum value, maximum value, mean value, kurtosis, and skewness, of the closest building.

Advantageously, having the statistical characteristics of the closest building as inputs features of training dataset allows the trained machine learning model to take into account the spatial correlation between the buildings in an area of interest. For example, knowing that a building that is close by has been damaged, for example by a wildfire, can mean it is more likely that a given building has also been damaged by the fire.

The target features of the training dataset comprise a damage status of the current building in the SAR image. The prediction features of the training dataset comprise a damage classification and an associated probability of the classification.

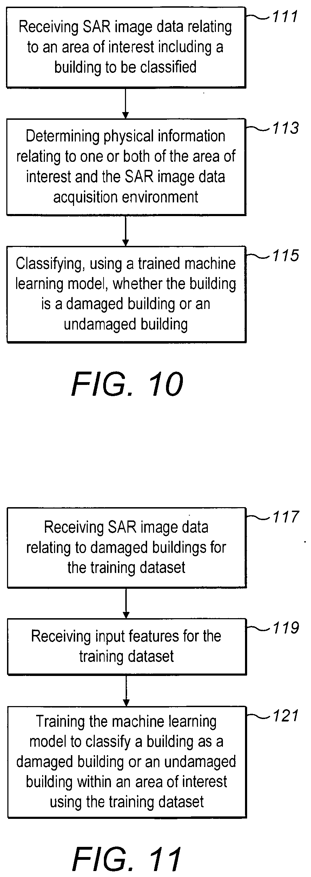

Figure 10 shows a flow chart of classifying a building as a damaged building or an undamaged building in SAR image data. The method commences with operation 111 comprising receiving SAR image data relating to an area of interest including a building to be classified.

**At** operation 113, physical information is determined. It should be noted here that the determining may for example comprise requesting the physical information and receiving it, deriving the physical information from a larger set of information or any other operation as will be familiar to those skilled in the art. The physical information may relate to the area of interest. Additionally, or alternatively, the physical information may relate to the SAR image data acquisition environment, in other words the environment in which the received SAR image data was obtained. This physical information may be used in the classification of a building as damaged or undamaged.

**At** operation 115, a trained machine learning model is used to classify whether the building is a damaged building or an undamaged building. The trained machine learning model has been trained on a training dataset comprising training SAR image data relating to damaged buildings. Input features of the training dataset comprise physical information relating to one or both of the area of interest and the data acquisition environment of the training SAR image data. Typically, the kinds of physical information determined at operation 113 which may be used in the classification will be the same as the physical information forming the input features of the training SAR data. In practice one or more kinds of physical data may not be available in both the determined features and the input features. The same applies to other determined features and input features described elsewhere here.

Figure 11 is a flow chart showing a method of training a machine learning model to classify a building as a damaged building or an undamaged building in SAR image, for example for use in a method as shown in figure 10. The flow chart shows a method of training a machine learning model to classify a building as a damaged building or an undamaged building in a synthetic aperture radar "SAR" image using machine learning, the method comprising: training the machine learning model to classify a building as a damaged building or an undamaged building within an area of interest using a training dataset, wherein: the training dataset comprises training SAR image data relating to damaged buildings; and input features of the training dataset comprise physical information relating to one or both of areas including the damaged buildings and the data acquisition environment of the training SAR image data. Thus figure 11 shows at operation 117 receiving the SAR image data relating to damaged buildings for the training dataset, and at operation 119 receiving input features for the training dataset. The input features of the training dataset will generally correspond to those expected to be received for the received SAR image data for a building to be classified. In other words, the physical information determined at operation 113 of figure 10 will usually be the same as the received input features for the training dataset at operation 119 of figure 11, namely physical information relating to one or both of the area of interest and the data acquisition environment of the training SAR image data.

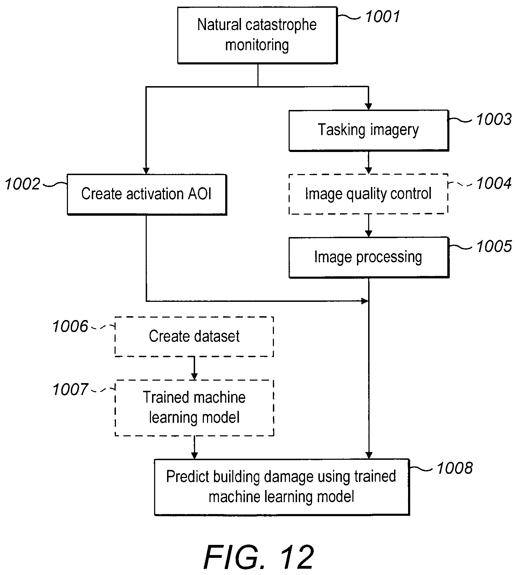

Figure 12 shows a flow chart of a method of classifying a building as a damaged building or an undamaged building in SAR image data, including training a machine learning model.

In step 1001, a natural catastrophe, such as a wildfire, is monitored. For example, this can involve monitoring RSS information and/or using natural catastrophe monitoring applications and tools.

In step 1002, in response to determining that a natural catastrophe has occurred, an area of interest is selected. The area of interest is an area where the natural catastrophe has occurred. Alternatively, the area of interest can be selected where a natural catastrophe is predicted to occur. In another example, the area of interest can also be an area where the natural catastrophe is likely to occur. The area of interest can be adjusted before, during or after the natural catastrophe.

In step 1003, in response to determining that a natural catastrophe has occurred, the SAR satellite is instructed to take a SAR image or multiple SAR images of the area of interest. The method comprises determines an operating mode of the SAR satellite, for example: stripmap; spotlight; and spot extended area imaging mode (SLEA). Other operating modes are also possible. The method also determines the location and timing of the image or images, which then defines the incidence angle. Optionally, the satellite can be tasked such that the incidence angle can be chosen to be greater than 20 degrees. Optionally, the incidence angle can be chosen to be about 40 degrees. Optionally, the incidence angle be chosen to be less than 60 degrees.

In optional step 1004, the SAR image taken by SAR satellite undergoes quality control. Applying quality control to the SAR image comprises searching for image artefacts and/or geolocation issues identified in the SAR image and can help to improve the image.

In step 1005, the SAR image undergoes image processing. Applying image processing comprises at least one of the following: data calibration; speckle filtering; dB scaling; DEM slice from DEM service; vertical datum correction; and orthorectification.

In steps 1006 and 1007, the method creates the training dataset and trains a machine learning model, for example according to the description in relation to Figures 1 - 7. This would usually be performed separately from the steps 1001-1005, and usually before steps 1001-1005 take place. Training SAR images of damaged and undamaged buildings are collected and labelled. The statistical characteristics and the environmental information of the training SAR images are labelled to each of the training SAR images. The damage status of the training SAR images are labelled to each of the training SAR images. A machine learning model is trained to predict if a building in the area of interest is damaged or undamaged using the training dataset. Steps 1006 and 1007 are not essential if using a pre-trained machine learning model.

In step 1008, the trained machine learning model is used to classify if a building in the area of interest is damaged or undamaged and its associated probability. Optionally, the prediction is sent to decision makers to assess how to respond to the natural catastrophe.

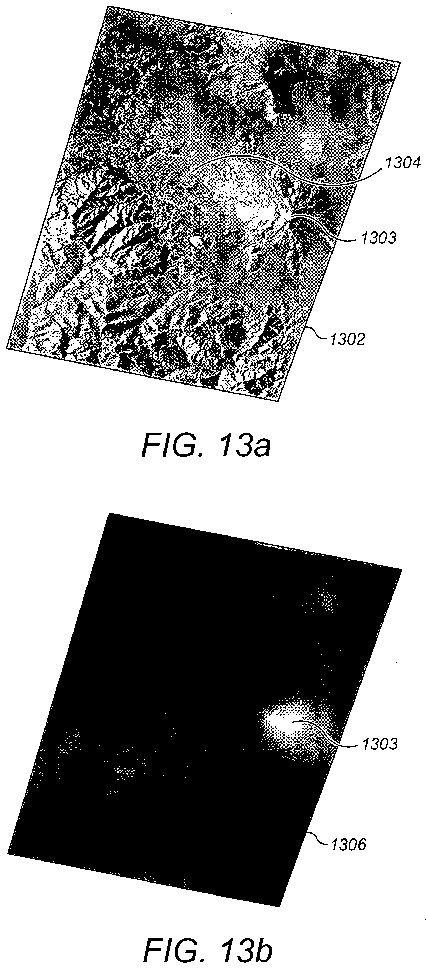

Figures 13 to 18 show an example of how a trained Random Forest machine learning model can be used to classify buildings as undamaged or damaged by a wildfire.

Figure 13a shows a SAR image 1302 showing a region affected by a wildfire. The wildfire was the Mill Fire that occurred in the vicinity of Weed, California, USA, in September of 2022, referred to as the "Mill Fire". The wildfire SAR image 1302 shows an area of interest 1304 comprising buildings potentially affected by the Mill Fire. The wildfire SAR image 1302 also shows a terrain object 1303 which might be represented in SAR image data. In general, a terrain object 1303 can be for example a mountain, hill, or any other object exhibiting steep slopes. In the illustrated example, the terrain object 1303 is Mount Shasta.

The wildfire SAR image data making up the image 1302 comprises signal values. In the illustrated example, the signal values represent amplitudes of the reflected radar beams. In the illustrated example, regions of the area on Earth with higher back-scatter or reflection of the SAR signal are shown as lighter and/or brighter coloured pixels in the image 1302, and regions of the area that lower back-scatter or reflection of SAR signals from the SAR satellite are shown as darker and/or dimmer coloured pixels. Based on the distribution of signal values in the wildfire SAR image data, statistical characteristics of the image data can be determined for each building identified in the area.

Figure 13b shows physical information relating to the area of the image 1302. In the illustrated embodiment, the physical information is environmental information, wherein the environmental information is digital elevation model (DEM) topography information 1306 of the same region shown by the wildfire SAR image 1302. The DEM topography information 1306 comprises the elevation of each point on the region of the SAR image 1302. The slope (or gradient) of each point on the region of the SAR image 1302 is the first derivative of the elevation. The gradient of each point on the region of the SAR image 1302 can be mapped onto its corresponding pixel in the wildfire SAR image 1302. In the illustrated example, higher and lower elevation refers to the magnitude of the elevation. For example, it can be seen in DEM topography information 1306 that terrain object 1303 (Mt. Shasta) has the highest elevations (brightest pixels) in the image, and that the highest elevations occur closest to the peak of Mt. Shasta. In another example, the DEM topography information 1306 can comprise the magnitude and direction of the gradient of each point on the region of the SAR image 1302.

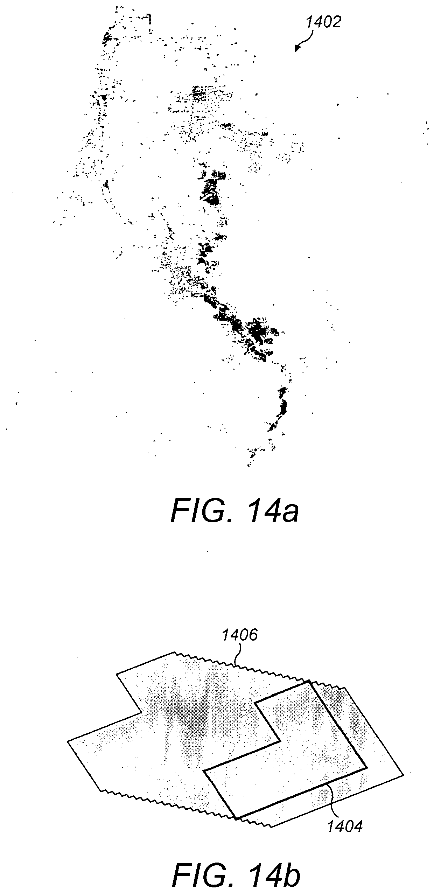

Figure 14a shows another example of physical information relating to the SAR image 1302. In Figure 14a, the physical information comprises building information. Building information comprises building footprint information 1402. In the illustrated example, the building footprint information 1402 shows the location of each building, and its footprint is shown as a dark area. Darker areas in building footprint information 1402 indicate a higher density of building footprints in the area, and light areas indicate a lower density of building footprints. Although building footprint information 1402 is shown zoomed out, zooming in would show the building footprint of each individual building and a reasonably precise indication of where the building footprint is located.

Figure 14b shows another example of physical information relating to the SAR image 1302. In Figure 14b, the physical information comprises building information. In particular 14b shows an initial building footprint 1404 (as might be extracted from building footprint information 1402) and an example of a buffered building footprint 1406, indicated by the entire shaded area. In this example, buffered building footprint comprises the actual building footprint 1404, and may also comprise the areas covered by the layover areas and the shadow areas of a building in an area of interest of the SAR image 1302. In the illustrated example, the building footprint 1404 is represented as a solid black outline and the buffered building footprint 1406 is represented as a dotted black outline with grey fill, for example in an image. In an example, the signal values are the amplitudes of the SAR returns for all the pixels within the shaded area 1406, and the statistical characteristics are taken from the distribution of amplitude values within the buffered building footprint for each building.

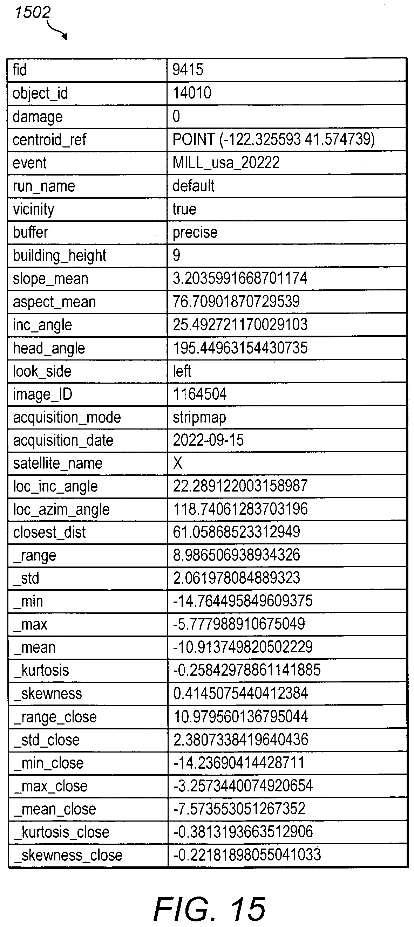

Figure 15 shows features 1502 of the data used to form the SAR image 1302. These features comprise physical information relating to an area of interest in the wildfire SAR image 1302, the SAR image data acquisition environment of the SAR image data 1302, and statistical characteristics of a building in the image data 1302. In the illustrated example of figure 15, physical information comprises building height, slope gradient, aspect angle, distance to the closest building from the current building, and SAR image data acquisition environment comprising satellite incidence angle, satellite heading angle, satellite azimuth angle, satellite look side orientation, satellite acquisition mode, and satellite acquisition date. Statistical characteristics comprises range of the signal values, standard deviation of the signal values, minimum value of the signal values, maximum value of the signal values, mean value of the signal values, kurtosis of the signal values, skewness of the signal values, range of the signal values of the closest building from the current building, standard deviation of the signal values of the closest building from the current building, minimum value of the signal values of the closest building from the current building, maximum value of the signal values of the closest building from the current building, mean value of the signal values of the closest building from the current building, kurtosis of the signal values of the closest building from the current building, and skewness of the signal values of the closest building from the current building.

It will be appreciated that any one or more of these features may be used as input features of training SAR image data and correspondingly determined for any new set of SAR image data relating to buildings to be classified.

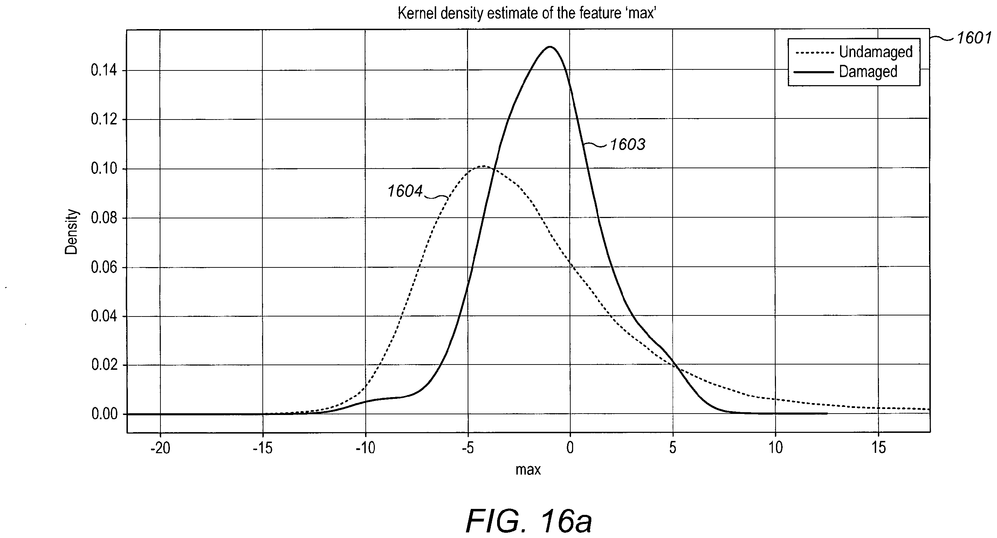

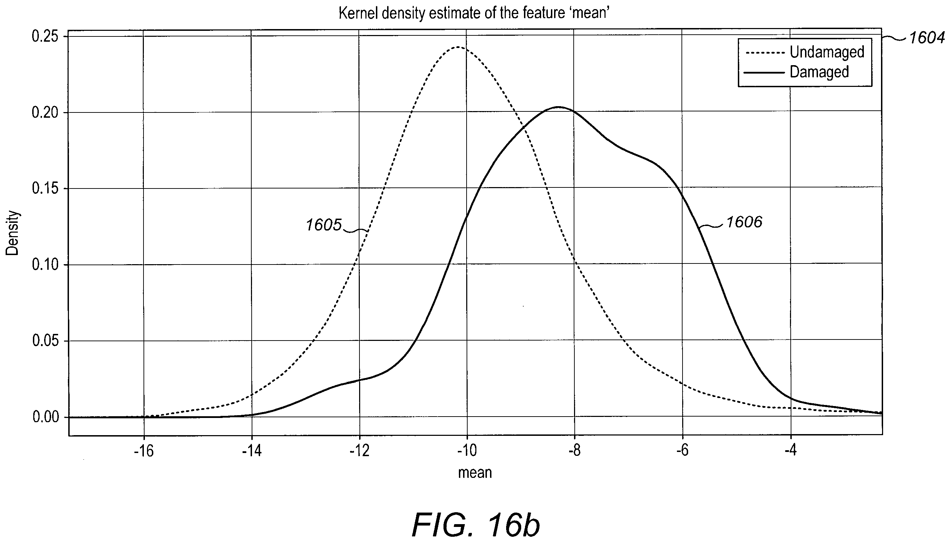

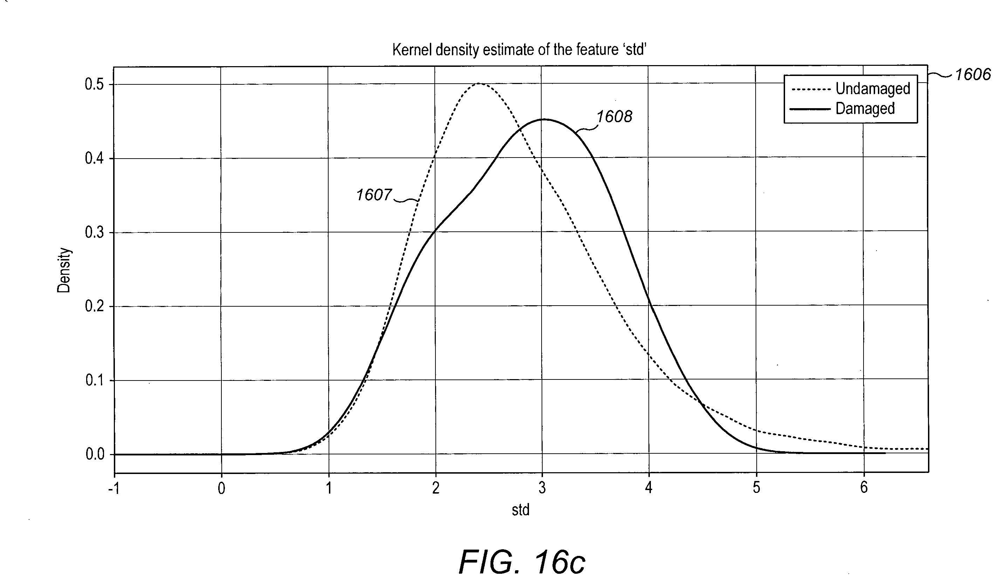

Figure 16a shows an example kernel density estimate of the maximum value distribution in the buffered building footprints for undamaged buildings 1604 and for damaged buildings 1603. Figure 16b shows an example kernel density estimate of the mean value distribution of undamaged buildings 1605 and of damaged buildings 1606. Figure 16c shows an example kernel density estimate of the standard deviation value distribution of undamaged buildings 1607 and of damaged buildings 1608. In this case, ground truth information is used to determine which buildings are damaged and which buildings or undamaged. Figures 16a to 16b show examples of statistical characteristics that are different between undamaged and damaged buildings. If all the statistical characteristics of undamaged and damaged buildings were the same, it would not be possible to classify damaged and undamaged buildings. However, figures 16a - 16c show that the statistical characteristics of the damaged vs undamaged buildings are not the same, and the signature statistical characteristics of damaged buildings and/or the signature statistical characteristics of undamaged buildings can be used to classify each building as damaged or undamaged.

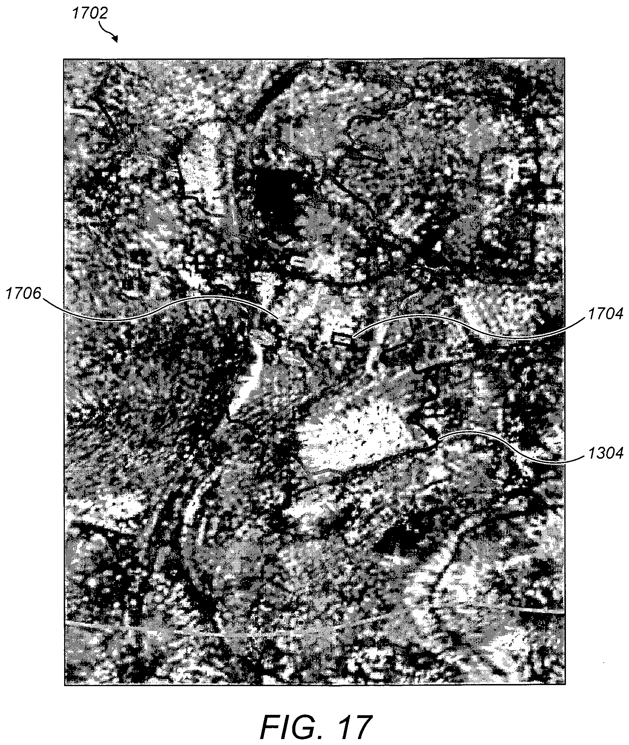

Figure 17 shows an example of a classified wildfire SAR image 1702. The classified wildfire SAR image 1702 has been classified using a random forest model using signature statistical characteristics derived from statistical characteristics such as those shown in Figures 16a - 16c. The area of interest 1304 represents a fire perimeter and comprises buildings classified as damaged buildings 1704 and buildings classified as undamaged buildings 1706. The area of interest 1304 can comprise a plurality of buildings classified as damaged buildings 1704 or undamaged buildings 1706. The damaged buildings 1704 and undamaged buildings 1706 can be indicated as different colours and/or shading on the area of interest 1304.

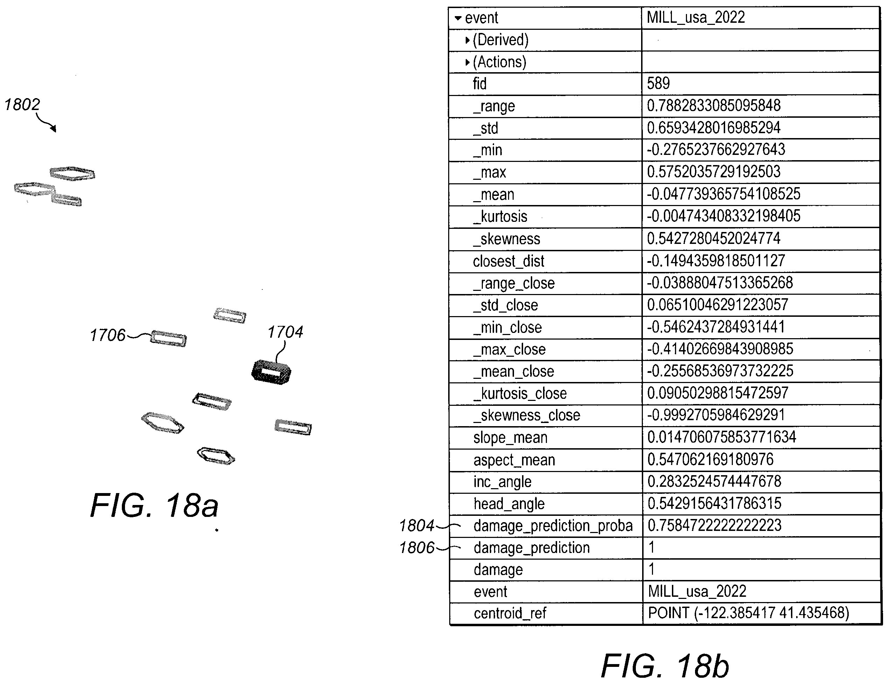

Figure 18a shows a detailed view of the buffered building footprints 1802 shown in Figure 17. One building has been classified as a damaged building 1704. The other buildings, for example corresponding to undamaged building 1706 have been classified as undamaged buildings.

Figure 18b shows physical information, statistical information and predicted values of the damaged building 1704. The prediction values for the damaged building 1704 have been determined, for example using a random forest model. In the illustrated example, the predicated values indicate that damaged building 1704 has a damage prediction probability 1804 of approximately 76%. This represents how well the statistical characteristics of damaged building 1704 match the signature statistical characteristics of damaged buildings. In an example, the threshold for determining if a building is damaged or not can be set to 50%. The damage prediction probability in this case is clearly over 50%, so the damage prediction 1806 is 1, and the building is classified as being damaged.

The examples described in Figures 13-18 show an example in which the amplitude of the SAR signal is the signal value, and that the statistical characteristics of the amplitude value within a buffered footprint for each building can be used as input to a machine learning model to differentiate between damaged and undamaged buildings.

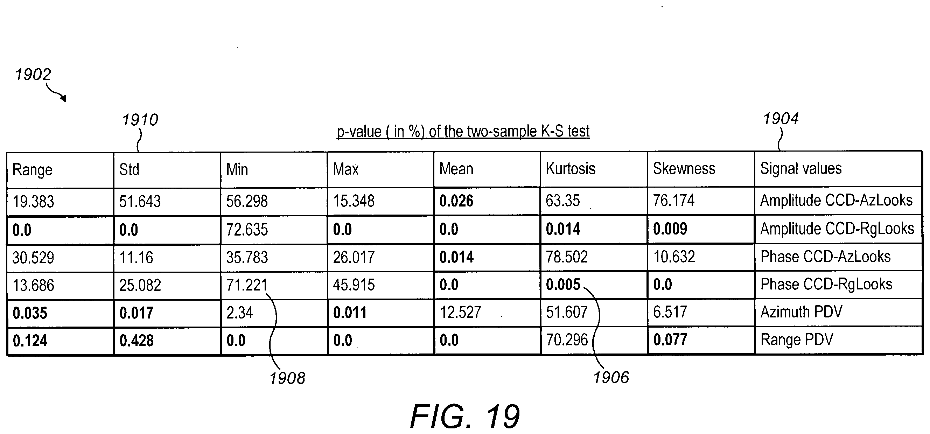

Figure 19 shows an example of how the statistical characteristics of other signal values can also be used to differentiate between damaged and undamaged buildings. As described earlier in the description, other signal values can be derived from the SAR image data and statistical characteristics of these additional signal values can be used independently or in conjunction with the amplitude data to help classify a building as damaged or undamaged.

In Figure 19, a comparison of the statistical characteristics of a distribution of values corresponding to building footprints of damaged and undamaged buildings are shown for the following signal values: 1) amplitude coherent change detection values between azimuth sub-apertures (Amplitude CCD-AzLooks), 2) amplitude coherent change detection values between range sub-apertures (Amplitude CCD-RgLooks), 3) phase coherent change detection values between azimuth sub-apertures (Phase CCD-AzLooks), 4) phase coherent change detection values between range sub-apertures (Phase CCD-RzLooks), 5) phase derivative values in Azimuth (Azimuth PDV), and 6) phase derivative values in range (Range PDV).

In this example the statistical characteristics are taken from just the building footprint area, and do not include any buffer area. In an example, the following approach was taken in order to show that each of these alternative signal values can be used to distinguish between damaged and undamaged buildings.

- Derive the signal values for each building footprint (e.g., Range PDV)

- Obtain the building footprints.

- Obtain the ground truth for damaged and undamaged buildings, for example from a joint damage assessment effort led by public authorities after the end of the event.

- Derive the statistics for each building footprint: range, standard deviation, minimum value, maximum value, mean value, kurtosis, and skewness.

- Perform a two-sample Kolmogorov-Smirnov test to quantify the ability to classify the damaged and undamaged buildings based on each signal statistic for each different type of signal value.

As is known in the field of statistics, the Kolmogorov-Smirnov test (K-S test or KS test) is a nonparametric test of the quality of continuous (or discontinuous) one-dimensional probability distributions that can be used to compare a sample with a reference probability distribution (one-sample K-S test), or to compare two samples (two-sample K-S test). In Figure 19, the results of a two-sample K-S test are shown. The functions being compared are estimated using the kernel density estimation, as they were in Figures 16a - 16c. The resultant p-values provide an indication of the probability that the two sets of samples were drawn from the same but unknown probability distribution.

In an example, the threshold of the p-value is set to 0.01 (i.e., 99%), meaning that if the derived p-value is less than 1%, then the two sets of samples are not drawn from the same probability density function and thus a distinction (e.g., between damaged and undamaged buildings) based on that statistical characteristic of that signal value is possible. If the p-value is greater than 1%, then the two sets of samples are drawn from the same probability density function and thus a distinction is not possible using that statistical characteristic of that signal value.

In Figure 19, table 1902 shows the p-values in percent resulting from performing two-sample Kolmogorov-Smirnov tests on a number of different statistical characteristics (e.g., standard deviation shown in column 1910) for the six different signal values shown in column 1904. The distribution of values for an example set of damaged buildings are compared to a distribution of values for an example set of undamaged buildings. In this case, buildings are known to be damaged or undamaged based on ground truth. P values less than 1% have been identified by outlining and bolding the values, for example cell 1906. P values greater than 1%, such as in cell 1908, are not bolded. The bolded P values that are less than 1% indicate that damaged buildings can be differentiated from undamaged buildings using this statistical characteristic for this particular signal value, and not bold P values greater than 1% indicate that it would be difficult or impossible to distinguish between damaged and undamaged buildings using this statistical characteristic for this particular signal value.

In Figure 19, there is at least one cell with a bolded value for each of the different signal values shown. This shows that the statistical characteristics of each of the signal types shown could be used to classify buildings as either damaged or undamaged, although some signal values may provide more information. For example, stronger signature statistical characteristics of damaged buildings may be associated with signal values that have a greater number of statistical characteristics that can be used to differentiate between damaged and undamaged buildings (i.e., more cells in a row that have a P value less than 1%). For example, in Figure 19, using Amplitude and Phase CCD-RgLooks, Range PDV, and Azimuth PDV may provide more information than Amplitude CCD-AzLooks, because only the Mean statistical characteristic has a P value less than 1% in the Amplitude CCD-Azlooks row, whereas the other signal values have multiple statistical characteristics that have a P value less than 1%. Although the statistical characteristics of one signal value could be used independently to train a machine learning model and to classify buildings as damaged or undamaged, it may be possible to achieve greater accuracy by using the statistical characteristics of two or more signal values, for example amplitude combined with one or more of the signal values shown in Figure 19.

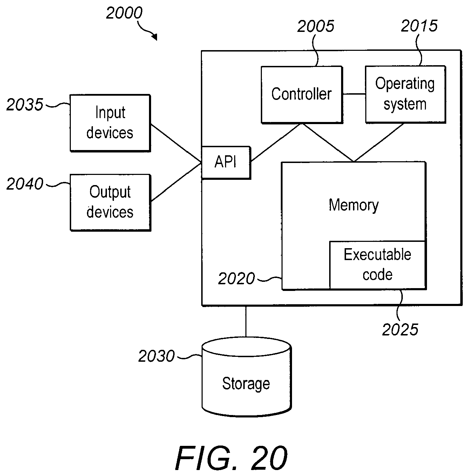

Figure 20 shows a computing system 2000, on which any of the above-described methods may be performed. In particular, the computing system 2000 may comprise a single computing device or components such as a laptop, tablet, desktop or other computing device. Alternatively functions of system 2000 may be distributed across multiple computing devices.

In general, the steps of the methods described here will be performed on earth, for example at a ground station or other facility on earth in communication with a ground station.

The computing system 2000 may include one or more controllers such as controller 2005 that may be, for example, a central processing unit processor (CPU), a graphics processing unit (GPU) a chip or any suitable processor or computing or computational device such as an FPGA mentioned, an operating system 2015, a memory 2020 storing executable code 2025, storage 2030 which may be external to the system or embedded in memory 2020, one or more input devices 2035 and one or more output devices 2040.

One or more processors in one or more controllers such as controller 2005 may be configured to carry out any of the methods described here. For example, one or more processors within controller 2005 may be connected to memory 2020 storing software or instructions that, when executed by the one or more processors, cause the one or more processors to carry out a method according to some embodiments of the present invention. Controller 2005 or a central processing unit within controller 2005 may be configured, for example, using instructions stored in memory 2020, to perform the method as described above.

SAR data may be received at a processor comprised in the controller 2005 which then controls the subsequent operations of the above-described methods according to one or more commands or processes which may be stored as part of the executable code 2025.

Input devices 2035 may be or may include a mouse, a keyboard, a touch screen or pad or any suitable input device. It will be recognized that any suitable number of input devices may be operatively connected to computing system 2000 as shown by block 2035. Output devices 2040 may include one or more displays, speakers and/or any other suitable output devices. It will be recognized that any suitable number of output devices may be operatively connected to computing system 2000 as shown by block 2040. The input and output devices may for example be used to enable a user to select information, e.g., images and graphs as shown here, to be displayed.

In the embodiments described above, all or parts of the method may be performed by a server. The server may comprise a single server or network of servers. In some examples, the functionality of the server may be provided by a network of servers distributed across a geographical area, such as a worldwide distributed network of servers, and a user/operator of the method may be connected to an appropriate one of the network servers based upon, for example, a user location.

The embodiments described above are fully automatic. In some examples a user or operator of the system may manually instruct some steps of the method to be carried out.

In the described embodiments of the invention parts of the system may be implemented as a form of a computing and/or electronic device. Such a device may comprise one or more processors which may be microprocessors, controllers or any other suitable type of processors for processing computer executable instructions to control the operation of the device in order to gather and record routing information. In some examples, for example where a system on a chip architecture is used, the processors may include one or more fixed function blocks (also referred to as accelerators) which implement a part of the method in hardware (rather than software or firmware). Platform software comprising an operating system, or any other suitable platform software, may be provided at the computing-based device to enable application software to be executed on the device.

Various functions described herein can be implemented in hardware, software, or any combination thereof. If implemented in software, the functions can be stored on or transmitted over as one or more instructions or code on any suitable computer-readable medium.

Alternatively, or in addition, the functionality described herein can be performed, at least in part, by one or more hardware logic components. For example, and without limitation, hardware logic components that can be used may include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

Although illustrated as a single system, it is to be understood that a computing device may be a distributed system. Thus, for instance, several devices may be in communication by way of a network connection and may collectively perform tasks described as being performed by the computing device. Although illustrated as a local device it will be appreciated that the computing device may be located remotely and accessed via a network or other communication link (for example using a communication interface).

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

It will be understood that the benefits and advantages described above may relate to one embodiment or may relate to several embodiments. The embodiments are not limited to those that solve any or all of the stated problems or those that have any or all of the stated benefits and advantages. Variants should be considered to be included into the scope of the invention.

Any reference to 'an' item refers to one or more of those items. The term 'comprising' is used herein to mean including the method steps or elements identified, but that such steps or elements do not comprise an exclusive list and a method or apparatus may contain additional steps or elements.

**As** used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices.

Further, as used herein, the term "exemplary" is intended to mean "serving as an illustration or example of something".

Further, to the extent that the term "includes" is used in either the detailed description or the claims, such term is intended to be inclusive in a manner similar to the term "comprising" as "comprising" is interpreted when employed as a transitional word in a claim.

The figures illustrate exemplary methods. While the methods are shown and described as being a series of acts that are performed in a particular sequence, it is to be understood and appreciated that the methods are not limited by the order of the sequence. For example, some acts can occur in a different order than what is described herein. In addition, an act can occur concurrently with another act. Further, in some instances, not all acts may be required to implement a method described herein.

Moreover, the acts described herein may comprise computer-executable instructions that can be implemented by one or more processors and/or stored on a computer-readable medium or media. The computer-executable instructions can include routines, sub-routines, programs, threads of execution, and/or the like. Still further, results of acts of the methods can be stored in a computer-readable medium, displayed on a display device, and/or the like.

It will be understood that the above description of a preferred embodiment is given by way of example only and that various modifications may be made by those skilled in the art. What has been described above includes examples of one or more embodiments. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

**Claims**

1. A computer-implemented method of classifying a building as a damaged building or an undamaged building in a synthetic aperture radar "SAR" image using machine learning, the method comprising:

   receiving (111) SAR image data comprising an area of interest including one or more buildings or building footprints to be classified;
   determining one or more statistical characteristics of a distribution of signal values of the received SAR image data for each building or building footprint in the area of interest;
   determining (113) physical information of the area of interest and the SAR image data acquisition environment; and
   classifying (115), using a trained machine learning model, whether the building is a damaged building or an undamaged building, based on the determined one or more statistical characteristics and the physical information, wherein:

   the trained machine learning model has been trained on a training dataset comprising training SAR image data of damaged buildings, wherein input features of the training dataset further comprise one or more statistical characteristics of the distribution of signal values for each building or building footprint of the training SAR image data of the training dataset; and
   input features of the training SAR image data comprise physical information of areas of interest including the damaged buildings and the data acquisition environment of the training SAR image data,

   wherein the signal values comprise one or more of:

   phase derivative values of SAR echo signals, with respect to one or both of azimuth and range;
   phase coherent change detection values between range sub-apertures of SAR echo signals and/or phase coherent change detection values between azimuth sub-apertures of SAR echo signals; or
   amplitude coherent change detection values between range sub-apertures of SAR echo signals and/or amplitude coherent change detection values between azimuth sub-apertures of SAR echo signals,
   wherein the physical information of the area of interest comprises digital elevation model "DEM" topography information or building information of a building to be classified,
   wherein the physical information of the SAR image data acquisition environment comprises information relating to a satellite used to obtain the SAR image data, and comprises at least one of: a satellite incidence angle or a satellite heading angle.

2. A method according to claim 1, wherein the digital elevation model "DEM" topography information comprises one or more of slope gradient and aspect angle.

3. A method according to any preceding claim, wherein the building information comprises one or more of:

   information relating to a neighbouring building;
   distance to the closest neighbouring building, being a damaged building or an undamaged building;
   building footprint information;
   height of the building;
   type of building;
   roof material of the building;
   shape of the building;
   size of a layover area of the building; or
   size of a shadow area of the building.

4. A method according to claim 3, wherein the building information comprises a buffer extending beyond the building footprint and the method further comprises calculating the buffer based on the layover and shadow areas of the building.

5. A method according to claim 4, wherein the buffered building footprint is obtained by sliding the building footprint by A meters on the layover region, where A is the length of the layover, and by B meters on the shadow region, where B is the length of the shadow, and then by merging the layover-sliding building footprint, the shadow-sliding building footprint and the genuine building footprint.

6. A method according to any preceding claim, wherein the one or more statistical characteristics of the SAR image data and one or more statistical characteristics of the training dataset comprises a signature back-scatter signal distribution of values.

**7.** A method according to any of claims 1 to 6, wherein the one or more statistical characteristic of the distribution of signal values comprises at least one of the following:

range of the signal values;
standard deviation of the signal values;
minimum value of the signal values;
maximum value of the signal values;
mean value of the signal values;
kurtosis of the signal values; or
skewness of the signal values.

**8.** A computer-implemented method of training a machine learning model to classify a building as a damaged building or an undamaged building in a synthetic aperture radar "SAR" image using machine learning, the method comprising:

training the machine learning model to classify a building as a damaged building or an undamaged building within an area of interest based on one or more statistical characteristics and based on physical information, wherein the one or more statistical characteristics are statistical characteristics of a distribution of signal values of SAR image data for each of one or more buildings or building footprint in the area of interest, and wherein the physical information is physical information of the area of interest and the SAR image data acquisition environment,
wherein the training is performed using a training dataset, wherein:

the training dataset comprises training SAR image data of damaged buildings; and
input features of the training dataset comprise physical information of areas of interest including the damaged buildings and the data acquisition environment of the training SAR image data,

wherein input features of the training dataset further comprise one or more statistical characteristics of the distribution of signal values for each building or building footprint of the training SAR image data of the training dataset,
wherein the signal values comprise one or more of:

phase derivative values of SAR echo signals, with respect to one or both of azimuth and range;
phase coherent change detection values between range sub-apertures of SAR echo signals and/or phase coherent change detection values between azimuth sub-apertures of SAR echo signals; or
amplitude coherent change detection values between range sub-apertures of SAR echo signals and/or amplitude coherent change detection values between azimuth sub-apertures of SAR echo signals,

wherein the physical information of the areas of interest comprises digital elevation model "DEM" topography information or building information of a building to be classified,
wherein the physical information of the SAR image data acquisition environment comprises information relating to a satellite used to obtain the SAR image data, and comprises at least one of: a satellite incidence angle or a satellite heading angle.

**9.** A computer-readable medium comprising instructions which, when executed in a computing system, causes the computing system to carry out the method of any preceding claim.

**Patentansprüche**

**1.** Computerimplementiertes Verfahren zum Klassifizieren eines Gebäudes als beschädigtes oder unbeschädigtes Gebäude in einem SAR-Bild (Synthetic Aperture Radar) unter Verwendung von maschinellem Lernen, wobei das Verfahren umfasst:

Empfangen (111) von SAR-Bilddaten, die ein Gebiet von Interesse umfassen, einschließlich eines oder mehrerer zu klassifizierender Gebäude oder Gebäudegrundrisse;
Bestimmen eines oder mehrerer statistischer Merkmale einer Verteilung von Signalwerten der empfangenen SAR-Bilddaten für jedes Gebäude oder jeden Gebäudegrundriss im Gebiet von Interesse;
Bestimmen (113) physikalischer Informationen über das Gebiet von Interesse und die Erfassungsumgebung der SAR-Bilddaten; und
Klassifizieren (115) mithilfe eines trainierten Modells für maschinelles Lernen, ob es sich bei dem Gebäude um ein beschädigtes oder ein unbeschädigtes Gebäude handelt, basierend auf den bestimmten statistischen Merkmalen und den physikalischen Informationen,
wobei:

das trainierte Modell für maschinelles Lernen anhand eines Trainingsdatensatzes trainiert wurde, der SAR-Bilddaten beschädigter Gebäude umfasst, wobei Eingabemerkmale des Trainingsdatensatzes ferner ein oder mehrere statistische Merkmale der Verteilung von Signalwerten für jedes Gebäude oder jeden Gebäudegrundriss der SAR-Bilddaten des Trainingsdatensatzes umfassen; und

Eingabemerkmale der Trainings-SAR-Bilddaten physikalische Informationen über Gebiete von Interesse umfassen, einschließlich der beschädigten Gebäude und der Datenerfassungsumgebung der Trainings-SAR-Bilddaten.

wobei die Signalwerte eines oder mehrere der Folgenden umfassen:

Phasenableitungswerte von SAR-Echosignalen in Bezug auf Azimut und/oder Entfernung;

Werte der Phasenkohärenzänderungserkennung zwischen Entfernungsteilaperturen von SAR-Echosignalen und/oder Werte der Phasenkohärenzänderungserkennung zwischen Azimut-Teilaperturen von SAR-Echosignalen; oder

Werte der Amplitudenkohärenzänderungserkennung zwischen Entfernungsteilaperturen von SAR-Echosignalen und/oder Werte der Amplitudenkohärenzänderungserkennung zwischen Azimut-Teilaperturen von SAR-Echosignalen.

wobei die physikalischen Informationen des Gebiets von Interesse topografische Informationen eines digitalen Höhenmodells "DEM" oder Gebäudeinformationen eines zu klassifizierenden Gebäudes umfassen,

wobei die physikalischen Informationen der SAR-Bilddatenerfassungsumgebung Informationen über einen Satelliten umfassen, der zum Erhalten der SAR-Bilddaten verwendet wird, und mindestens eines von einem Einfallswinkel des Satelliten oder einem Kurswinkel des Satelliten umfassen.

2. Verfahren nach Anspruch 1, wobei die Topographieinformationen des digitalen Höhenmodells "DEM" eine oder mehrere der folgenden Größen umfassen: Hangneigung und/oder Expositionswinkel.

3. Verfahren nach einem der vorstehenden Ansprüche, wobei die Gebäudeinformationen eines oder mehrere der Folgenden umfassen:

Informationen zu einem Nachbargebäude;
Abstand zum nächstgelegenen Nachbargebäude, unabhängig davon, ob es sich um ein beschädigtes oder ein unbeschädigtes Gebäude handelt;

Informationen zum Gebäudegrundriss;
Höhe des Gebäudes;
Typ des Gebäudes;
Dachmaterial des Gebäudes;
Form des Gebäudes;
Größe einer Überlagerungsfläche des Gebäudes; oder
Größe des Schattenbereichs des Gebäudes.

4. Verfahren nach Anspruch 3, wobei die Gebäudeinformationen einen Puffer umfassen, der sich über den Gebäudegrundriss hinaus erstreckt, und das Verfahren ferner die Berechnung des Puffers auf der Grundlage der Überlagerungs- und Schattenbereiche des Gebäudes umfasst.

5. Verfahren nach Anspruch 4, wobei der gepufferte Gebäudegrundriss durch Verschieben des Gebäudegrundrisses um A Meter im Überlagerungsbereich, wobei A die Länge des Überlagerungsbereichs ist, und um B Meter im Schattenbereich, wobei B die Länge des Schattenbereichs ist, und anschließendes Zusammenführen des verschobenen Gebäudegrundrisses im Überlagerungsbereich, des verschobenen Gebäudegrundrisses im Schattenbereich und des ursprünglichen Gebäudegrundrisses erhalten wird.

6. Verfahren nach einem vorstehenden Anspruch, wobei das eine oder die mehreren statistischen Merkmale der SAR-Bilddaten und eines oder mehrere statistische Merkmale des Trainingsdatensatzes eine charakteristische Rückstreusignalverteilung von Werten umfassen.

7. Verfahren nach einem der Ansprüche 1 bis 6, wobei das eine oder die mehreren statistischen Merkmale der Verteilung der Signalwerte mindestens eines der Folgenden umfassen:

Bereich der Signalwerte;
Standardabweichung der Signalwerte;
Minimalwert der Signalwerte;
Maximalwert der Signalwerte;
Mittelwert der Signalwerte;
Kurtosis der Signalwerte; oder
Schiefe der Signalwerte.

8. Computerimplementiertes Verfahren zum Trainieren eines Modells für maschinelles Lernen zum Klassifizieren eines Gebäudes als beschädigtes oder unbeschädigtes Gebäude in einem SAR-Bild (Synthetic Aperture Radar), wobei das Folgendes umfasst:

Trainieren des Modells für maschinelles Lernen zum Klassifizieren eines Gebäudes innerhalb eines Gebiets von Interesse als beschädigtes oder unbeschädigtes Gebäude auf der Grundlage eines oder mehrerer statistischer Merkmale und auf der Grundlage physikalischer Informationen.

wobei es sich bei dem einen oder den mehreren statistischen Merkmalen um statistische Merkmale einer Verteilung von Signalwerten von SAR-Bilddaten für jedes einzelne Gebäude oder jeden Gebäudegrundriss im Gebiet von Interesse handelt und wobei es sich bei den physikalischen Informationen um physikalische Informationen des Gebiet von Interesses und der SAR-Bilddatenerfassungsumgebung handelt,

wobei das Training anhand eines Trainingsdatensatzes durchgeführt wird, wobei:

> der Trainingsdatensatz Trainings-SAR-Bilddaten von beschädigten Gebäuden umfasst; und
> Eingabemerkmale des Trainingsdatensatzes physikalische Informationen über Gebiete von Interesse umfassen, einschließlich der beschädigten Gebäude und der Datenerfassungsumgebung der Trainings-SAR-Bilddaten,

wobei Eingabemerkmale des Trainingsdatensatzes weiter eine oder mehrere statistische Eigenschaften der Verteilung der Signalwerte für jedes Gebäude oder jeden Gebäudegrundriss der Trainings-SAR-Bilddaten des Trainingsdatensatzes umfassen,

wobei die Signalwerte eines oder mehrere der Folgenden umfassen:

> Phasenableitungswerte von SAR-Echosignalen in Bezug auf Azimut und/oder Entfernung;
> Werte der Phasenkohärenzänderungserkennung zwischen Entfernungsteilaperturen von SAR-Echosignalen und/oder Werte der Phasenkohärenzänderungserkennung zwischen Azimut-Teilaperturen von SAR-Echosignalen; oder
> Werte der Amplitudenkohärenzänderungserkennung zwischen Entfernungsteilaperturen von SAR-Echosignalen und/oder Werte der Amplitudenkohärenzänderungserkennung zwischen Azimut-Teilaperturen von SAR-Echosignalen,

wobei die physikalischen Informationen der Gebiete von Interesse topografische Informationen in Form eines digitalen Höhenmodells "DEM" oder Gebäudeinformationen eines zu klassifizierenden Gebäudes umfassen,

wobei die physikalischen Informationen der SAR-Bilddatenerfassungsumgebung Informationen über einen Satelliten umfassen, der zum Erhalten der SAR-Bilddaten verwendet wird, und mindestens eines von einem Einfallswinkel des Satelliten oder einem Kurswinkel des Satelliten umfassen.

9. Computerlesbares Medium, das Anweisungen enthält, welche, wenn sie in einem Computersystem ausgeführt werden, das Computersystem veranlassen, das Verfahren nach einem vorstehenden Anspruch durchzuführen.

## Revendications

1. Procédé mis en œuvre par ordinateur de classification d'un bâtiment comme un bâtiment endommagé ou un bâtiment non endommagé sur une image radar à synthèse d'ouverture « SAR » en utilisant l'apprentissage automatique, le procédé comprenant :

> la réception (111) de données d'images SAR comprenant une zone d'intérêt incluant un ou plusieurs bâtiments ou empreintes de bâtiments à classifier ;
> la détermination d'une ou de plusieurs caractéristiques statistiques d'une distribution de valeurs de signal des données d'image SAR reçues pour chaque bâtiment ou empreinte de bâtiment dans la zone d'intérêt ;
> la détermination (113) d'informations physiques de la zone d'intérêt et de l'environnement d'acquisition de données d'images SAR ; et
> la classification (115), en utilisant un modèle d'apprentissage automatique entraîné, du bâtiment comme un bâtiment endommagé ou un bâtiment non endommagé, sur la base des une ou plusieurs caractéristiques statistiques déterminées et des informations physiques,
> dans lequel :

>> le modèle d'apprentissage automatique entraîné a été entraîné sur un jeu de données d'entraînement comprenant des données d'images SAR d'entraînement de bâtiments endommagés, dans lequel des caractéristiques d'entrée du jeu de données d'entraînement comprennent en outre une ou plusieurs caractéristiques statistiques de la distribution de valeurs de signal pour chaque bâtiment ou empreinte de bâtiment des données d'images SAR d'entraînement du jeu de données d'entraînement ; et
>> des caractéristiques d'entrée des données d'images SAR d'entraînement comprennent des informations physiques de zones d'intérêt incluant les bâtiments endommagés et l'environnement d'acquisition de données des données d'images SAR d'entraînement,

dans lequel les valeurs de signal comprennent une ou plusieurs parmi :

des valeurs de dérivée de phase de signaux d'écho SAR, par rapport à un ou aux deux de l'azimut et de la portée ;
des valeurs de détection de changement cohérentes en phase entre des sous-ouvertures de portée de signaux d'écho SAR et/ou des valeurs de détection de changement cohérentes en phase entre des sous-ouvertures azimutales de signaux d'écho SAR ; ou
des valeurs de détection de changement cohérentes en amplitude entre des sous-ouvertures de portée de signaux d'écho SAR et/ou des valeurs de détection de changement cohérentes en amplitude entre des sous-ouvertures azimutales de signaux d'écho SAR,

dans lequel les informations physiques de la zone d'intérêt comprennent des informations topographiques de modèle d'élévation numérique « DEM » ou des informations de bâtiment d'un bâtiment à classifier,
dans lequel les informations physiques de l'environnement d'acquisition de données d'images SAR comprennent des informations relatives à un satellite utilisé pour obtenir les données d'images SAR, et comprennent au moins un parmi : un angle d'incidence de satellite ou un angle de cap de satellite.

2. Procédé selon la revendication 1, dans lequel les informations topographiques de modèle d'élévation numérique « DEM » comprennent un ou plusieurs parmi un gradient de pente et un angle d'aspect.

3. Procédé selon une quelconque revendication précédente, dans lequel les informations de bâtiment comprennent un ou plusieurs parmi :

des informations relatives à un bâtiment voisin ;
une distance au bâtiment voisin le plus proche, étant un bâtiment endommagé ou un bâtiment non endommagé ;
des informations d'empreinte de bâtiment ;
une hauteur du bâtiment ;
un type de bâtiment ;
un matériau de toit du bâtiment ;
une forme du bâtiment ;
une taille d'une zone de chevauchement du bâtiment ; ou
une taille de zone d'ombre du bâtiment.

4. Procédé selon la revendication 3, dans lequel les informations de bâtiment comprennent une zone tampon s'étendant au-delà de l'empreinte de bâtiment et le procédé comprend en outre le calcul de la zone tampon sur la base des zones de chevauchement et d'ombre du bâtiment.

5. Procédé selon la revendication 4, dans lequel l'empreinte de bâtiment tamponnée est obtenue en décalant l'empreinte de bâtiment de A mètres sur la région de chevauchement, où A est la longueur du chevauchement, et de B mètres sur la région d'ombre, où B est la longueur de l'ombre, puis en fusionnant l'empreinte de bâtiment décalée sur le chevauchement, l'empreinte de bâtiment décalée sur l'ombre et l'empreinte de bâtiment réelle.

6. Procédé selon une quelconque revendication précédente, dans lequel les une ou plusieurs caractéristiques statistiques des données d'image SAR et une ou plusieurs caractéristiques statistiques du jeu de données d'entraînement comprennent une distribution de valeurs de signal de rétrodiffusion caractéristique.

7. Procédé selon l'une quelconque des revendications 1 à 6, dans lequel les une ou plusieurs caractéristiques statistiques de la distribution de valeurs de signal comprennent au moins l'un des suivants :

plage des valeurs de signal ;
écart type des valeurs de signal ;
valeur minimale des valeurs de signal ;
valeur maximale des valeurs de signal ;
valeur moyenne des valeurs de signal ;
coefficient d'aplatissement des valeurs du signal ; ou
asymétrie des valeurs de signal.

8. Procédé mis en œuvre par ordinateur d'entraînement d'un modèle d'apprentissage automatique pour classifier un bâtiment comme un bâtiment endommagé ou un bâtiment non endommagé sur une image radar à synthèse d'ouverture « SAR » en utilisant l'apprentissage automatique, le procédé comprenant :

l'entraînement du modèle d'apprentissage automatique à classifier un bâtiment comme un bâtiment endommagé ou un bâtiment non endommagé au sein d'une zone d'intérêt sur la base d'une ou plusieurs caractéristiques statistiques et sur la base d'informations physiques,
dans lequel les une ou plusieurs caractéristiques statistiques sont des caractéristiques statistiques d'une distribution de valeurs de signal de données d'images SAR pour chacun d'un ou plusieurs bâtiments ou d'une empreinte de bâtiment dans la zone d'intérêt, et dans lequel les informations physiques sont des informations physiques de la zone d'intérêt et de l'environnement d'acquisition de données d'images SAR, dans lequel l'entraînement est réalisé en utilisant un jeu de données d'entraînement, dans lequel :

le jeu de données d'entraînement comprend des données d'images SAR d'entraînement de bâtiments endommagés ; et

des caractéristiques d'entrée du jeu de données d'entraînement comprennent des informations physiques de zones d'intérêt incluant les bâtiments endommagés et l'environnement d'acquisition de données des données d'images SAR d'entraînement,

dans lequel des caractéristiques d'entrée du jeu de données d'entraînement comprennent en outre une ou plusieurs caractéristiques statistiques de la distribution de valeurs de signal pour chaque bâtiment ou empreinte de bâtiment des données d'images SAR d'entraînement du jeu de données d'entraînement,

dans lequel les valeurs de signal comprennent une ou plusieurs parmi :

des valeurs de dérivée de phase de signaux d'écho SAR, par rapport à un ou aux deux de l'azimut et de la portée ;

des valeurs de détection de changement cohérentes en phase entre des sous-ouvertures de portée de signaux d'écho SAR et/ou des valeurs de détection de changement cohérentes en phase entre des sous-ouvertures azimutales de signaux d'écho SAR ; ou

des valeurs de détection de changement cohérentes en amplitude entre des sous-ouvertures de portée de signaux d'écho SAR et/ou des valeurs de détection de changement cohérentes en amplitude entre des sous-ouvertures azimutales de signaux d'écho SAR,

dans lequel les informations physiques des zones d'intérêt comprennent des informations topographiques de modèle d'élévation numérique « DEM » ou des informations de bâtiment d'un bâtiment à classifier,

dans lequel les informations physiques de l'environnement d'acquisition de données d'images SAR comprennent des informations relatives à un satellite utilisé pour obtenir les données d'images SAR, et comprennent au moins un parmi : un angle d'incidence de satellite ou un angle de cap de satellite.

9. Support lisible par ordinateur comprenant des instructions qui, lorsqu'elles sont exécutées dans un système informatique, amènent le système informatique à mettre en œuvre le procédé selon une quelconque revendication précédente.

*102*

SAR

θ

*101*

*100*

Layover
area

)
*103*

Shadow
area

)
*104*

## FIG. 1

*200*

*104*     *103*

# FIG. 2

[Pre-event]                                    [Post-event]

Weak
reflection

Stronger
reflection

*110*

Damaged     Rubble
building

*120*

Radar shadow

# FIG. 3

Optical image
(pre-event) *410*

Optical image
(post-event) *430*

SAR image
(pre-event) *420*

SAR image
(post-event) *440*

## FIG. 4

*500*

*510*  *520*

| Input features (statistical) | | | Target features |
|---|---|---|---|
| Range | Standard deviation | Minimum value | Damage status |
| Maximum value | Mean value | Kurtosis | |
| Skewness | | | |

## FIG. 5

FIG. 6

550

510    520

| Input features (statistical) | | | Target features |
|---|---|---|---|
| Range | Standard deviation | Minimum value | |
| Maximum value | Mean value | Kurtosis | |
| Skewness | | | |
| Input features (physical) | | | Damage status |
| Slope gradient | Aspect angle | SAR incidence angle | |
| Satellite heading angle | Distance to closest building | Statistical characteristics of closest building | |

*FIG. 7*

580

510    520

| Input features (environmental) | | | Target features |
|---|---|---|---|
| Slope gradient | Aspect angle | SAR incidence angle | Damage status |
| Satellite heading angle | Distance to closest building | Statistical characteristics of closest building | |

# FIG. 8

| Model | Random forest |
|---|---|
| Optimization | Randomized search on hyperparameters |
| Score to be optimized | Accuracy |
| Cross validation | 10-fold |
| Normalization | Robust scaler derived from training dataset |
| Train/test radio | 80% training 20 test |
| Stratification | Per event |
| Input features | Range, standard deviation, minimum value, maximum value, mean value, kurtosis, and skewness, of current building.<br><br>Slope gradient, aspect angle, SAR incidence angle, satellite heading angle, distance to closest building.<br><br>Range, standard deviation, minimum value, maximum value, mean value, kurtosis, and skewness, of closest building. |
| Output prediction | Damage classification [damaged; undamaged] Probability of classification |

FIG. 9

Receiving SAR image data relating to an area of interest including a building to be classified ~111

Determining physical information relating to one or both of the area of interest and the SAR image data acquisition environment ~113

Classifying, using a trained machine learning model, whether the building is a damaged building or an undamaged building ~115

## FIG. 10

Receiving SAR image data relating to damaged buildings for the training dataset ~117

Receiving input features for the training dataset ~119

Training the machine learning model to classify a building as a damaged building or an undamaged building within an area of interest using the training dataset ~121

## FIG. 11

Natural catastrophe
monitoring *1001*

Tasking imagery *1003*

*1002* Create activation AOI

Image quality control *1004*

Image processing *1005*

*1006* Create dataset

*1007* Trained machine
learning model

Predict building damage using trained
machine learning model *1008*

# FIG. 12

*FIG. 13a*

*FIG. 13b*

*1402*

## FIG. 14a

*1406*

*1404*

## FIG. 14b

1502

| fid | 9415 |
|---|---|
| object_id | 14010 |
| damage | 0 |
| centroid_ref | POINT (-122.325593 41.574739) |
| event | MILL_usa_20222 |
| run_name | default |
| vicinity | true |
| buffer | precise |
| building_height | 9 |
| slope_mean | 3.2035991668701174 |
| aspect_mean | 76.70901870729539 |
| inc_angle | 25.492721170029103 |
| head_angle | 195.44963154430735 |
| look_side | left |
| image_ID | 1164504 |
| acquisition_mode | stripmap |
| acquisition_date | 2022-09-15 |
| satellite_name | X |
| loc_inc_angle | 22.289122003158987 |
| loc_azim_angle | 118.74061283703196 |
| closest_dist | 61.05868523312949 |
| _range | 8.986506938934326 |
| _std | 2.061978084889323 |
| _min | -14.764495849609375 |
| _max | -5.777988910675049 |
| _mean | -10.913749820502229 |
| _kurtosis | -0.25842978861141885 |
| _skewness | 0.4145075440412384 |
| _range_close | 10.979560136795044 |
| _std_close | 2.3807338419640436 |
| _min_close | -14.23690414428711 |
| _max_close | -3.2573440074920654 |
| _mean_close | -7.573553051267352 |
| _kurtosis_close | -0.3813193663512906 |
| _skewness_close | -0.22181898055041033 |

## FIG. 15

Kernel density estimate of the feature 'max'

*FIG. 16a*

EP 4 498 330 B1

Kernel density estimate of the feature 'mean'

FIG. 16b

EP 4 498 330 B1

Kernel density estimate of the feature 'std'

FIG. 16c

EP 4 498 330 B1

FIG. 17

**FIG. 18a**

EP 4 498 330 B1

| ▾ event | MILL_usa_2022 |
|---|---|
| ▸ (Derived) | |
| ▸ (Actions) | |
| fid | 589 |
| _range | 0.7882833085095848 |
| _std | 0.6593428016985294 |
| _min | -0.2765237662927643 |
| _max | 0.5752035729192503 |
| _mean | -0.047739365754108525 |
| _kurtosis | -0.004743408332198405 |
| _skewness | 0.5427280452024774 |
| closest_dist | -0.1494359818501127 |
| _range_close | -0.03888047513365268 |
| _std_close | 0.06510046291223057 |
| _min_close | -0.5462437284931441 |
| _max_close | -0.41402669843908985 |
| _mean_close | -0.25568536973732225 |
| _kurtosis_close | 0.09050298815472597 |
| _skewness_close | -0.9992705984629291 |
| slope_mean | 0.014706075853771634 |
| aspect_mean | 0.547062169180976 |
| inc_angle | 0.2832524574447678 |
| head_angle | 0.5429156431786315 |
| damage_prediction_proba | 0.7584722222222223 |
| damage_prediction | 1 |
| damage | 1 |
| event | MILL_usa_2022 |
| centroid_ref | POINT (-122.385417 41.435468) |

1804

1806

**FIG. 18b**

1902

1910

p-value ( in %) of the two-sample K-S test

1904

| Range | Std | Min | Max | Mean | Kurtosis | Skewness | Signal values |
|---|---|---|---|---|---|---|---|
| 19.383 | 51.643 | 56.298 | 15.348 | **0.026** | 63.35 | 76.174 | Amplitude CCD-AzLooks |
| **0.0** | **0.0** | 72.635 | **0.0** | **0.0** | **0.014** | **0.009** | Amplitude CCD-RgLooks |
| 30.529 | 11.16 | 35.783 | 26.017 | **0.014** | 78.502 | 10.632 | Phase CCD-AzLooks |
| 13.686 | 25.082 | 71.221 | 45.915 | **0.0** | **0.005** | **0.0** | Phase CCD-RgLooks |
| **0.035** | **0.017** | 2.34 | **0.011** | 12.527 | 51.607 | 6.517 | Azimuth PDV |
| **0.124** | **0.428** | **0.0** | **0.0** | **0.0** | 70.296 | **0.077** | Range PDV |

1908

1906

*FIG. 19*

EP 4 498 330 B1

*FIG. 20*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LAPIAN et al.** *Detection of Building Damage due to the 2016 Kumamoto Earthquake using Texture Combinations of Single Post-event Airborne SAR Data*
- **GE et al.** *Building Damage Assessment Using Intensity SAR Data with Different Incidence Angles and Longtime Interval*
- **SUN et al.** *CG-Net: Conditional GIS-aware Network for Individual Building Segmentation in VHR SAR*
- **ADRIANO et al.** *Multi-Source Data Fusion Based on Ensemble Learning for Rapid Building Damage Mapping during the 2018 Sulawesi Earthquake and Tsunami in Palu, Indonesia*